(19) Europäisches Patentamt
European Patent Office
Office européen des brevets

(11) **EP 4 254 846 A1**

(12) **EUROPEAN PATENT APPLICATION**

(43) Date of publication:
**04.10.2023 Bulletin 2023/40**

(21) Application number: **23155657.2**

(22) Date of filing: **08.02.2023**

(51) International Patent Classification (IPC):
*H04L 5/00* (2006.01)     *H04B 7/0413* (2017.01)
*H04B 7/06* (2006.01)     *H04W 72/20* (2023.01)

(52) Cooperative Patent Classification (CPC):
**H04L 5/0023; H04L 5/0048**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **01.04.2022 KR 20220041250**

(71) Applicant: **LG Electronics Inc.**
**Yeongdeungpo-gu**
**Seoul, 07336 (KR)**

(72) Inventors:
• **GO, Seongwon**
  **06772 Seoul (KR)**
• **KIM, Hyungtae**
  **06772 Seoul (KR)**
• **KANG, Jiwon**
  **06772 Seoul (KR)**
• **PARK, Haewook**
  **06772 Seoul (KR)**

(74) Representative: **Maikowski & Ninnemann**
**Patentanwälte Partnerschaft mbB**
**Postfach 15 09 20**
**10671 Berlin (DE)**

(54) **METHOD AND APPARATUS FOR TRANSMITTING AND RECEIVING PUSCH IN WIRELESS COMMUNICATION SYSTEM**

(57)     Disclosed are a method and an apparatus for transmitting and receiving a PUSCH in a wireless communication system. A method of transmitting a PUSCH in a wireless communication system according to an aspect of the present disclosure may include: receiving, from a base station, configuration information related to an SRS, wherein the configuration information includes information on one or more SRS resource sets, and each of the one or more SRS resource sets includes a plurality of SRS resources; transmitting, to the base station, the SRS on a plurality of SRS resources in each of the one or more SRS resource sets; receiving, from the base station, DCI for scheduling the PUSCH for non-codebook based transmission, wherein the DCI includes one or more SRI fields; and transmitting, to the base station, the PUSCH based on the DCI.

FIG.8

EP 4 254 846 A1

**Description**

[Technical Field]

The present disclosure relates to a wireless communication system, and in more detail, relates to a method and an apparatus of transmitting and receiving a physical uplink shred channel (PUSCH) in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical object of the present disclosure is to provide a method and an apparatus of transmitting and receiving a physical uplink shared channel (PUSCH).

In addition, an additional technical object of the present disclosure is to provide a method and an apparatus for supporting multiple (in particular, more than 4) antenna port/layer PUSCH transmission.

The technical objects to be achieved by the present disclosure are not limited to the above-described technical objects, and other technical objects which are not described herein will be clearly understood by those skilled in the pertinent art from the following description.

[Technical Solution]

A method of transmitting a physical uplink shared channel (PUSCH) in a wireless communication system according to an aspect of the present disclosure may include: receiving, from a base station, configuration information related to a sounding reference signal (SRS), wherein the configuration information includes information on one or more SRS resource sets, and each of the one or more SRS resource sets includes a plurality of SRS resources; transmitting, to the base station, the SRS on a plurality of SRS resources in each of the one or more SRS resource sets; receiving, from the base station, downlink control information (DCI) for scheduling the PUSCH for non-codebook based transmission, wherein the DCI includes one or more SRS resource indicator (SRI) fields; and transmitting, to the base station, the PUSCH based on the DCI. A precoder and transmission rank of the PUSCH may be determined based on the one or more SRI fields for the one or more SRS resource sets, and the one or more of SRS resource sets may be associated with a single power control parameter set.

A terminal of receiving a physical uplink shared channel (PUSCH) in a wireless communication system according to an additional aspect of the present disclosure may include: transmitting, to a terminal, configuration information related to a sounding reference signal (SRS), wherein the configuration information includes information on one or more SRS resource sets, and each of the one or more SRS resource sets includes a plurality of SRS resources; receiving, from the terminal, the SRS on a plurality of SRS resources in each of the one or more SRS resource sets; transmitting, to the terminal, downlink control information (DCI) for scheduling the PUSCH for non-codebook based transmission, wherein the DCI includes one or more SRS resource indicator (SRI) fields; and receiving, from the terminal, the PUSCH based on the DCI. A precoder and transmission rank of the PUSCH may be determined based on the one or more SRI fields for the one or more SRS resource sets, and the one or more of SRS resource sets may be associated with a single power control parameter set.

[Advantageous Effects]

According to an embodiment of the present disclosure, by saving a size of an SRS resource indication field for supporting multiple (particularly, more than 4) antenna port/layer PUSCH transmission, a payload of downlink control information can be reduced.

In addition, according to an embodiment of the present disclosure, it is possible to reduce complexity of a terminal implementation for supporting multiple (particularly, more than 4) antenna port/layer PUSCH transmission.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.

FIG. 2 illustrates a frame structure in a wireless communication system to which the present disclosure may be applied.

FIG. 3 illustrates a resource grid in a wireless communication system to which the present disclosure may be applied.

FIG. 4 illustrates a physical resource block in a wireless communication system to which the present disclosure may be applied.

FIG. 5 illustrates a slot structure in a wireless communication system to which the present disclosure may be applied.

FIG. 6 illustrates physical channels used in a wireless communication system to which the present disclosure may be applied and a general signal transmission and reception method using them.

FIG. 7 illustrates a method of multiple TRPs transmission in a wireless communication system to which the present disclosure may be applied.

FIG. 8 is a diagram illustrating a signaling procedure for a method for transmitting and receiving a PUSCH according to an embodiment of the present disclosure.

FIG. 9 is a diagram illustrating an operation of a UE for transmitting and receiving a PUSCH according to an embodiment of the present disclosure.

FIG. 10 is a diagram illustrating an operation of a base station for transmitting and receiving a PUSCH according to an embodiment of the present disclosure.

FIG. 11 illustrates a block diagram of a wireless communication device according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB (evolved-NodeB), a gNB (Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS (Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system, "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214 (physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal

- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

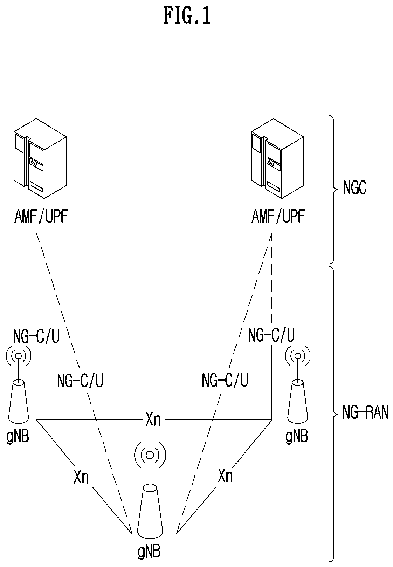

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

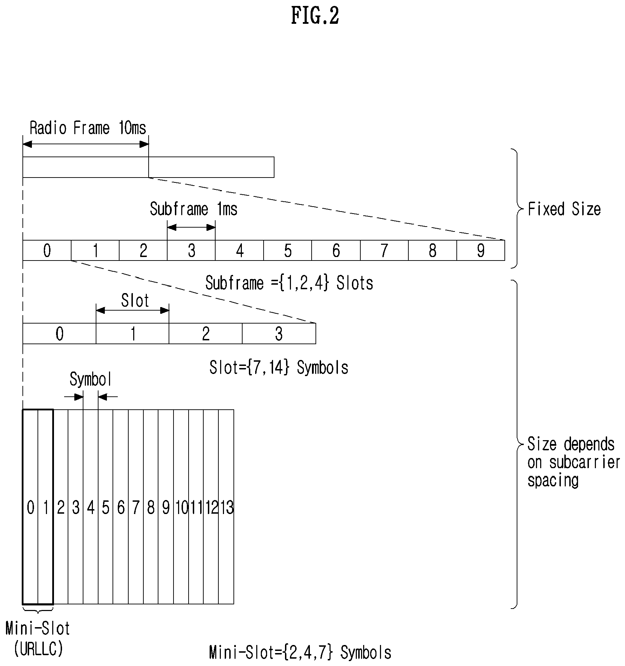

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\triangle f = 2^{\mu} \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise.

An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c = 1/(\triangle f_{max} \cdot N_f)$. Here, $\triangle f_{max}$ is $480 \cdot 103$ Hz and $N_f$ is 4096. Downlink and uplink transmission is configured (organized) with a radio frame having a duration of $T_f = 1/(\triangle f_{max} N_f/100) \cdot T_c = 10$ms. Here, a radio frame is configured with 10 subframes having a duration of $T_{sf} = (\triangle f_{max} N_f/1000) \cdot T_c = 1$ms, respectively. In this case, there may be one set of frames for an uplink and one set of frames for a downlink. In addition, transmission in an uplink frame No. i from a terminal should start earlier by $T_{TA} = (N_{TA} + N_{TA, offset})T_c$ than a corresponding downlink frame in a corresponding terminal starts. For a subcarrier spacing configuration $\mu$, slots are numbered in an increasing order of $n_s^{\mu} \in \{0,..., N_{slot}^{subframe, \mu} - 1\}$ in a subframe and are numbered in an increasing order of $n_{s,f}^{\mu} \in \{0,..., N_{slot}^{frame, \mu} - 1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu} N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame, \mu}$) and the number of slots per subframe ($N_{slot}^{subframe, \mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame, \mu}$ | $N_{slot}^{subframe, \mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on μ=2 (SCS is 60kHz), 1 subframe may include 4 slots referring to Table 3. 1 subframe=(1,2,4) slot shown in FIG. 2 is an example, the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

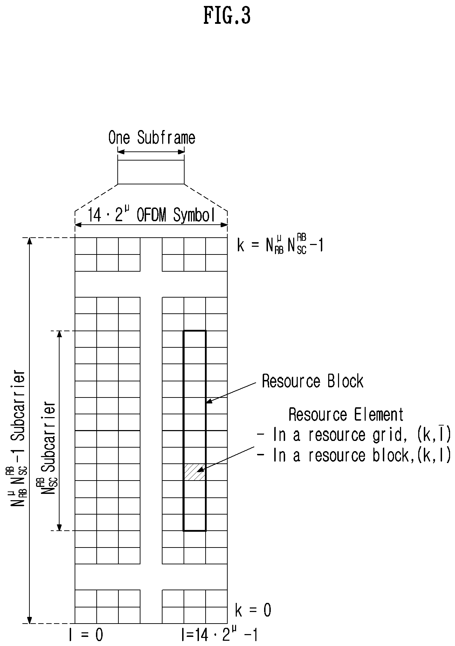

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per μ and antenna port p. Each element of a resource grid for μ and an antenna port p is referred to as a resource element and is uniquely identified by an index pair (k, l'). Here, k=0, ..., $N_{RB}^{\mu}N_{sc}^{RB}$-1 is an index in a frequency domain and l'=0, ..., $2^{\mu}N_{symb}^{(\mu)}$-1 refers to a position of a symbol in a subframe. When referring to a resource element in a slot, an index pair (k,l) is used. Here, l=0,..., $N_{symb}^{\mu}$-1. A resource element (k,l') for μ and an antenna port p corresponds to a complex value, $a_{k,l'}^{(p,\mu)}$. When there is no risk of confusion or when a specific antenna port or numerology is not specified, indexes p and μ may be dropped, whereupon a complex value may be $a_{k,l'}^{(p)}$ or $a_{k,l'}$. In addition, a resource block (RB) is defined as $N_{sc}^{RB}$=12 consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
- absoluteFrequencyPointA represents a frequency-position of point A expressed as in ARFCN (absolute radiofrequency channel number).

Common resource blocks are numbered from 0 to the top in a frequency domain for a subcarrier spacing configuration μ. The center of subcarrier 0 of common resource block 0 for a subcarrier spacing configuration μ is identical to 'point A'. A relationship between a common resource block number $n_{CRB}^{\mu}$ and a resource element (k,l) for a subcarrier spacing configuration μ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}$-1 in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BwP,i}^{start,\mu}$ is a common resource block that a BWP starts relatively to common resource block 0.

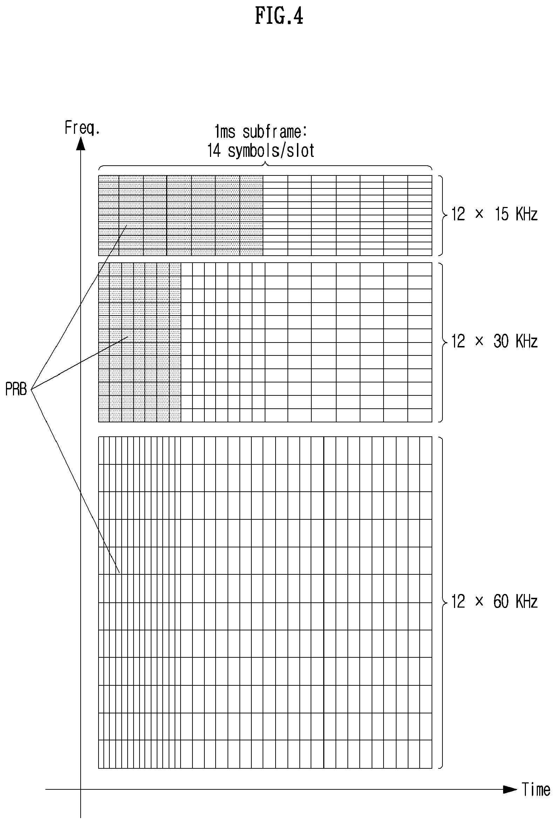

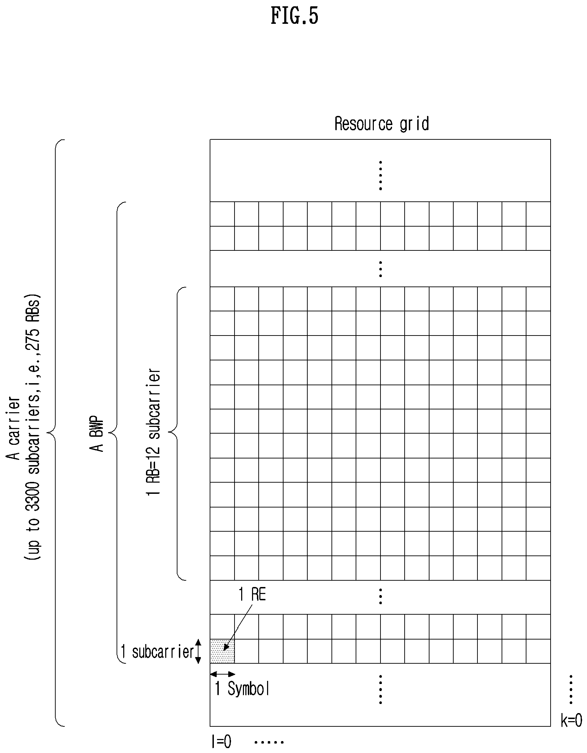

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

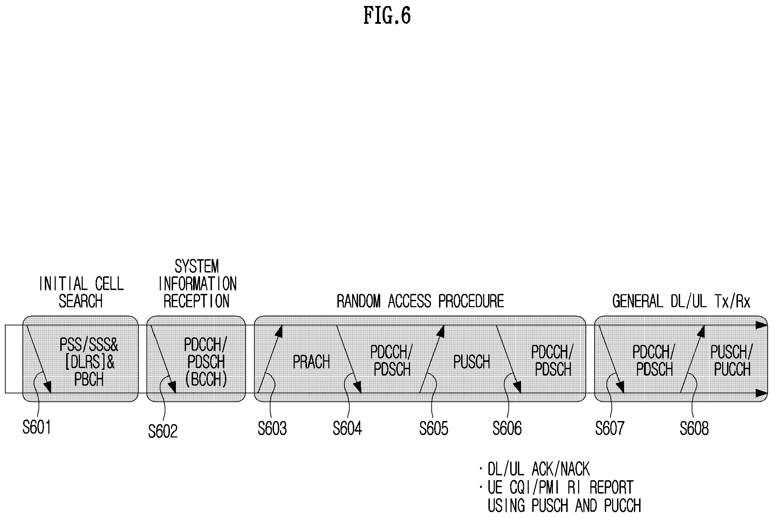

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB) (e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Sounding Reference Signal (SRS)

In Rel-15 NR, spatialRelationInfo may be used in order for a base station to indicate to a terminal a transmission beam which will be used when transmitting an UL channel. A base station may indicate which UL transmission beam will be used when transmitting a PUCCH and an SRS by configuring a DL reference signal (e.g., an SSB-RI(SB Resource Indicator), a CRI(CSI-RS Resource Indicator)(P/SP/AP: periodic/semi-persistent/aperiodic)) or an SRS (i.e., an SRS resource) as a reference RS for a target UL channel and/or a target RS through a RRC configuration. In addition, when a base station schedules a PUSCH to a terminal, a transmission beam which is indicated by a base station and used for SRS transmission is indicated as a transmission beam for a PUSCH through an SRI field and used as a PUSCH transmission beam of a terminal.

Hereinafter, a SRS for a codebook(CB) and a non-codebook(NCB) will be described.

First, for a CB UL, a base station may first configure and/or indicate transmission of an SRS resource set for 'a CB' to a terminal. In addition, a terminal may transmit any n port SRS resource in a corresponding SRS resource set. A base station may receive a UL channel based on corresponding SRS transmission and use it for PUSCH scheduling of a terminal. Subsequently, a base station may indicate a PUSCH (transmission) beam of a terminal by indicating a SRS resource for 'a CB' which is previously transmitted by a terminal through a SRI field of DCI when performing PUSCH scheduling through UL DCI. In addition, a base station may indicate an UL rank and an UL precoder by indicating an uplink codebook through a TPMI (transmitted precoder matrix indicator) field. Thereby, a terminal may perform PUSCH transmission according to a corresponding indication.

Next, for a NCB UL, a base station may first configure and/or indicate transmission of an SRS resource set for 'a non-CB' to a terminal. In addition, a terminal may simultaneously transmit corresponding SRS resources by determining a precoder of SRS resources (up to 4 resources, 1 port per resource) in a corresponding SRS resource set based on reception of a NZP CSI-RS associated with a corresponding SRS resource set. Subsequently, a base station may indicate a PUSCH (transmission) beam of a terminal and an UL rank and an UL precoder at the same time by indicating part of SRS resources for 'a non-CB' which are previously transmitted by a terminal through an SRI field of DCI when performing PUSCH scheduling through UL DCI. Thereby, a terminal may perform PUSCH transmission according to a corresponding indication.

Hereinafter, an SRS for beam management will be described.

An SRS may be used for beam management. Specifically, UL BM may be performed by beamformed UL SRS transmission. Whether UL BM of an SRS resource set is applied is configured by (a higher layer parameter) 'usage'. When usage is configured as 'BeamManagement(BM)', only one SRS resource may be transmitted to each of a plurality of SRS resource sets in a given time instant. A terminal may be configured with one or more Sounding Reference Symbol (SRS) resource sets configured by (a higher layer parameter) 'SRS-ResourceSet' (through higher layer signaling, e.g., RRC signaling, etc.). For each SRS resource set, UE may be configured with $K \geq 1$ SRS resources (a higher layer parameter, 'SRS-resource' ). Here, K is a natural number and the maximum value of K is indicated by SRS_capability.

Hereinafter, an SRS for antenna switching will be described.

An SRS may be used for acquisition of DL CSI (Channel State Information) information (e.g., DL CSI acquisition). In a specific example, a BS (Base station) may measure an SRS from UE after scheduling transmission of an SRS to UE (User Equipment) under a situation of a single cell or in multi cells (e.g., carrier aggregation (CA)) based on TDD. In this case, a base station may perform scheduling of a DL signal/channel to UE based on measurement by an SRS by assuming DL/UL reciprocity. Here, regarding SRS-based DL CSI acquisition, an SRS may be configured for antenna switching.

In an example, when following standards (e.g., 3gpp TS38.214), usage of an SRS may be configured to a base station and/or a terminal by using a higher layer parameter (e.g., usage of a RRC parameter, SRS-ResourceSet). Here, usage of a SRS may be configured as usage of beam management, usage of codebook transmission, usage of non-codebook transmission, usage of antenna switching, etc.

Hereinafter, a case in which SRS transmission (i.e., transmission of an SRS resource or an SRS resource set) is configured for antenna switching among the usages will be specifically described.

In an example, for a terminal with partial reciprocity, SRS transmission based on antenna switching (i.e., transmission antenna switching) may be supported for DL(downlink) CSI(Channel State Information) acquisition through SRS transmission under a situation such as TDD (Time Division Duplex). When antenna switching is applied, about $15\mu$s may be generally needed between SRS resources (and/or resources between a SRS resource and a PUSCH/a PUCCH) for antenna switching of a terminal. By considering it, (the minimum) guard period as in the following Table 6 may be defined.

[Table 6]

| μ | $\Delta f=2^{\mu} \cdot 15$ [kHz] | Y [Symbol] |
|---|---|---|
| 0 | 15 | 1 |
| 1 | 30 | 1 |
| 2 | 60 | 1 |
| 3 | 120 | 2 |

In Table 6, μ represents numerology, Δf represents subcarrier spacing and Y represents the number of symbols of a guard period, i.e., a length of a guard period. In reference to Table 6, the guard period may be configured based on a parameter μ which determines numerology. In the guard period, a terminal may be configured not to transmit any other signal and the guard period may be configured to be used fully for antenna switching. In an example, the guard period may be configured by considering SRS resources transmitted in the same slot. In particular, when a terminal is configured and/or indicated to transmit an aperiodic SRS configured by intra-slot antenna switching, a corresponding terminal may transmit an SRS on each designated SRS resource by using a different transmission antenna and the above-described guard period may be configured between each resource.

In addition, as described above, when a terminal is configured with an SRS resource and/or an SRS resource set configured for antenna switching through higher layer signaling, a corresponding terminal may be configured to perform SRS transmission based on UE capability related to antenna switching. In this case, UE capability related to antenna switching may be '1T2R' , '2T4R' , '1T4R' , '1T4R/2T4R' , '1T1R' , '2T2R' , '4T4R' , etc. Here, 'mTnR' may mean UE capability which supports m transmission and n reception.

(Example S1) For example, for a terminal which supports 1T2R, up to 2 SRS resource sets may be configured as a different value for resourceType of a higher layer parameter SRS-ResourceSet. In this case, each SRS resource set may have 2 SRS resources transmitted in different symbols and each SRS resource may configure a single SRS port in a given SRS resource set. In addition, an SRS port for a second SRS resource in an SRS resource set may be configured to be associated with a UE antenna port different from an SRS port for a first SRS resource in the same SRS resource set.

(Example S2) In another example, for a terminal which supports 2T4R, up to 2 SRS resource sets may be configured as a different value for resourceType of a higher layer parameter SRS-ResourceSet. Here, each SRS resource set may have 2 SRS resources transmitted in different symbols and each SRS resource may configure 2 SRS ports in a given SRS resource set. In addition, an SRS port pair for a second SRS resource in an SRS resource set may be configured to be associated with a UE antenna port different from an SRS port pair for a first SRS resource in the same SRS resource set.

(Example S3) In another example, for a terminal which supports 1T4R, SRS resource sets may be configured by a different scheme according to whether SRS transmission is configured as periodic, semi-persistent and/or aperiodic. First, when SRS transmission is configured as periodic or semi-persistent, 0 SRS resource set configured or 1 SRS resource set configured with 4 SRS resources based on resourceType of a higher layer parameter SRS-ResourceSet may be configured to be transmitted in different symbols. Here, each SRS resource may configure a single SRS port in a given SRS resource set. In addition, an SRS port for each SRS resource may be configured to be associated with a different UE antenna port. On the other hand, when SRS transmission is configured as aperiodic, 0 SRS resource set configured or 2 SRS resource sets configured with a total of 4 SRS resources based on resourceType of a higher layer parameter SRS-ResourceSet may be configured to be transmitted in different symbols of 2 different slots. Here, a SRS port for each SRS resource in 2 given SRS resource sets may be configured to be associated with a different UE antenna port.

(Example S4) In another example, for a terminal which supports 1T1R, 2T2R, or 4T4R, up to 2 SRS resource sets respectively configured with one SRS resource may be configured for SRS transmission. The number of SRS ports of each SRS resource may be configured to be 1, 2, or 4.

When indicated UE capability is 1T4R/2T4R, a corresponding terminal may expect that the same number of SRS ports (e.g., 1 or 2) will be configured for all SRS resources in SRS resource set(s). In addition, when indicated UE capability is 1T2R, 2T4R, 1T4R, or 1T4R/2T4R, a corresponding terminal may not expect that one or more SRS resource sets configured for antenna switching in the same slot will be configured or triggered. In addition, when indicated UE capability is 1T1R, 2T2R, or 4T4R, a corresponding terminal may not expect that one or more SRS resource sets configured for antenna switching in the same slot will be configured or triggered.

Uplink Power Control

It may be necessary to increase or decrease transmission power of a terminal (e.g., user equipment (UE) and/or a mobile device) according to a situation in a wireless communication system. As such, controlling transmission power of a terminal and/or a mobile device may be referred to as uplink power control. In an example, a method of controlling transmission power may be applied to satisfy requirements of a base station (e.g., gNB, eNB, etc.) (e.g., a SNR (Signal-to-Noise Ratio), a BER (Bit Error Ratio), a BLER (Block Error Ratio), etc.).

Power control as described above may be performed by an open-loop power control method and a closed-loop power control method.

Specifically, an open-loop power control method means a method of controlling transmission power without a feedback from a transmission device (e.g., a base station, etc.) to a reception device (e.g., a terminal, etc.) and/or a feedback from a reception device to a transmission device. In an example, a terminal may receive a specific channel/signal (a pilot channel/signal) from a base station and estimate strength of reception power by using it. Subsequently, a terminal may control transmission power by using strength of an estimated reception power.

Unlike it, a closed-loop power control method means a method of controlling transmission power based on a feedback from a transmission device to a reception device and/or a feedback from a reception device to a transmission device. In an example, a base station receives a specific channel/signal from a terminal and determines the optimum power level of a terminal based on a power level measured by a received specific channel/signal, SNR, BER, BLER, etc. A base station delivers information on a determined optimum power level (i.e., a feedback) to a terminal through a control channel, etc. and a corresponding terminal may control transmission power by using a feedback provided by a base station.

Hereinafter, a power control method for cases in which a terminal and/or a mobile device performs uplink transmission to a base station in a wireless communication system will be described specifically.

A transmission occasion for a PUSCH, a PUCCH, an SRS and/or a PRACH (i.e., a transmission time unit) (i) may be defined by a slot index ($n\_s$) in a frame of a system frame number (SFN), a first symbol (S) in a slot, the number (L) of consecutive symbols, etc.

Hereinafter, for convenience of a description, a power control method is described based on a case in which a terminal performs PUSCH transmission. Of course, a corresponding method may be extended and applied to other uplink data channel supported in a wireless communication system.

For PUSCH transmission in an active UL bandwidth part (UL BWP) of a carrier (f) of a serving cell (c), a terminal may calculate a linear power value of transmission power determined by the following Equation 3. Subsequently, a corresponding terminal may control transmission power by considering the number of antenna ports and/or the number of SRS ports, etc. for a calculated linear power value.

Specifically, when a terminal performs PUSCH transmission in an active UL BWP (b) of a carrier (f) of a serving cell (c) by using a parameter set configuration based on index j and a PUSCH power control adjustment state based on index 1, a terminal may determine PUSCH transmission power $P_{\text{PUSCH},b,f,c}(i,j,q_d,l)$ (dBm) at a PUSCH transmission occasion (i) based on the following Equation 3.

【Equation 3】

$$P_{\text{PUSCH}b,f,c}(i, j, q_d, l) = \min\left\{\begin{array}{l} P_{\text{CMAX},f,c}(i), \\ P_{\text{O\_PUSCH}b,f,c}(j) + 10\log_{10}(2^{\mu} \cdot M_{\text{RB}b,f,c}^{\text{PUSCH}}(i)) + \alpha_{b,f,c}(j) \cdot PL_{b,f,c}(q_d) + \Delta_{\text{TF}b,f,c}(i) + f_{b,f,c}(i,l) \end{array}\right\}$$

In Equation 3, index j represents an index for an open-loop power control parameter (e.g., $P_O$, alpha($\alpha$), etc.) and up to 32 parameter sets may be configured per cell. Index $q\_d$ represents an index of a DL RS resource for pathloss (PL) measurement (e.g., $PL_{b,f,c}(q_d)$) and up to 4 measured values may be configured per cell. Index 1 represents an index for a closed-loop power control process and up to 2 processes may be configured per cell.

Specifically, as $P_O$ (e.g., $P_{O\_\text{PUSCH},b,f,c}(j)$) is a parameter which is broadcast as part of system information, it may represent target reception power from reception. A corresponding Po value may be configured by considering throughput of a terminal, capacity of a cell, noise and/or interference, etc. In addition, alpha (e.g., $\alpha_{b,f,c}(j)$) may represent a ratio which performs compensation for pathloss. Alpha may be configured as a value from 0 to 1 and according to a configured value, full pathloss compensation or fractional pathloss compensation may be performed. In this case, the alpha value may be configured by considering interference and/or a data rate, etc. between terminals. In addition, $P_{\text{CMAX},f,c}(i)$ may represent configured UE transmit power. In an example, the configured UE transmit power may be interpreted as 'configured maximum UE output power' defined in 3GPP TS 38.101-1 and/or TS38.101-2. In addition,

$M_{RB,b,f,c}^{PUSCH}(i)$ may represent bandwidth of PUSCH resource allocation expressed as the number of resource blocks (RB) for a PUSCH transmission occasion based on a subcarrier spacing ($\mu$). In addition, $f_{b,f,c}(i,l)$ related to a PUSCH power control adjustment state may be configured or indicated based on a TPC command field of DCI (e.g., DCI format 0_0, DCI format 0_1, DCI format 2_2, DCI format2_3, etc.).

In this case, a specific RRC (Radio Resource Control) parameter (e.g., SRI-PUSCHPowerControl-Mapping, etc.) may represent a linkage between an SRI (SRS Resource Indicator) field of DCI (downlink control information) and the above-described index j, q_d, 1. In other words, the above-described index j, 1, q_d, etc. may be associated with a beam, a panel and/or a spatial domain transmission filter, etc. based on specific information. Thereby, PUSCH transmission power control in a unit of a beam, a panel and/or a spatial domain transmission filter may be performed.

Parameters and/or information for the above-described PUSCH power control may be configured individually (i.e., independently) per BWP. In this case, corresponding parameters and/or information may be configured or indicated by higher layer signaling (e.g., RRC signaling, a MAC-CE (Medium Access Control-Control Element), etc.) and/or DCI, etc. In an example, a parameter and/or information for PUSCH power control may be transmitted through RRC signaling PUSCH-ConfigCommon, PUSCH-PowerControl, etc. and PUSCH-ConfigCommon, PUSCH-PowerControl may be configured as in the following table 7.

[Table 7]

```
PUSCH-ConfigCommon ::=                SEQUENCE {
    groupHoppingEnabledTransformPrecoding      ENUMERATED {enabled}
    pusch-TimeDomainAllocationList             PUSCH-TimeDomainResourceAllocationList
    msg3-DeltaPreamble                 INTEGER (-1..6)
    p0-NominalWithGrant                INTEGER (-202..24)
    ...
}
PUSCH-PowerControl =                  SEQUENCE {
    tpc-Accumulation                   ENUMERATED { disabled }
    msg3-Alpha                         Alpha
    p0-NominalWithoutGrant             INTEGER (-202..24)
    p0-AlphaSets                       SEQUENCE (SIZE (1..maxNrofP0-PUSCH-AlphaSets)) OF P0-
PUSCH-AlphaSet
    pathlossReferenceRSToAddModList    SEQUENCE (SIZE (1..maxNrofPUSCH-PathlossReferenceRSs))
OF PUSCH-PathlossReferenceRS
    pathlossReferenceRSToReleaseList         SEQUENCE (SIZE (1..maxNrofPUSCH-
PathlossReferenceRSs)) OF PUSCH-PathlossReferenceRS-Id
    twoPUSCH-PC-AdjustmentStates       ENUMERATED {twoStates}
    deltaMCS                           ENUMERATED {enabled}
    sri-PUSCH-MappingToAddModList      SEQUENCE (SIZE (1..maxNrofSRI-PUSCH-Mappings)) OF SRI-
PUSCH-PowerControl
    sri-PUSCH-MappingToReleaseList     SEQUENCE (SIZE (1..maxNrofSRI-PUSCH-Mappings)) OF SRI-
PUSCH-PowerControlId
}
```

Through a method as described above, a terminal may determine or calculate PUSCH transmission power and transmit a PUSCH by using determined or calculated PUSCH transmission power.

Regarding transmission of a sounding reference signal (SRS) in an activated UL BWP of a carrier f of a serving cell c, a terminal may calculate a linear power value of transmit power determined by Equation 4 below. Thereafter, a terminal may control transmit power by equally dividing the calculated linear power value for antenna port(s) configured for an SRS.

Specifically, when a terminal perform SRS transmission in an activated UL BWP b of a carrier f of a serving cell c by using an SRS power control adjustment state based on an index 1, the terminal may determine the SRS transmission power $P_{SRS,b,f,c}(i,q_s,l)$ (dBm) at an SRS transmission occasion i based on Equation 4 below.

【Equation 4】

$$P_{\text{SRS},b,f,c}(i,q_s,l) = \min \begin{cases} P_{\text{CMAX},f,c}(i), \\ P_{\text{O\_SRS},b,f,c}(q_s) + 10\log_{10}(2^{\mu} \cdot M_{\text{SRS},b,f,c}(i)) + \alpha_{\text{SRS},b,f,c}(q_s) \cdot PL_{b,f,c}(q_d) + h_{b,f,c}(i,l) \end{cases}$$

In Equation 4, q_s represents an index for an open-loop power control parameter (e.g., $P_O$, alpha ($\alpha$), a DL RS resources for path loss (PL) measurements (e.g., $PL_{b,f,c}(q_d)$), etc.), and may be configured for each SRS resource set. Index 1 represents an index for a closed loop power control process, and a corresponding index may be configured independently of or in association with a PUSCH. If SRS power control is not associated with a PUSCH, a maximum number of closed loop power control processes for an SRS may be one.

Specifically, $P_0$ (e.g., $P_{0\_SRs,b,f,c}(q_s)$) is a parameter which is broadcasted as part of system information and may indicate target received power at a receiving side. The corresponding $P_0$ value may be configured in consideration of terminal throughput, cell capacity, noise and/or interference. In addition, alpha (e.g., $\alpha_{\text{SRS},b,f,c}(q_s)$) may indicate a ratio for performing compensation for path loss. Alpha may be configured to a value from 0 to 1, and full pathloss compensation or fractional pathloss compensation may be performed according to the configured value. In this case, the alpha value may be configured in consideration of interference between terminals and/or data rate. In addition, $P_{\text{CMAx},f,c}(i)$ may indicate the configured terminal transmission power. As an example, the configured terminal transmit power may be interpreted as 'configured maximum UE output power' defined in 3GPP TS 38.101-1 and/or TS38.101-2. In addition, $M_{\text{SRS},b,f,c}(i)$ may indicate a bandwidth of SRS resource allocation expressed as a number of resource blocks (RBs) for an SRS transmission occasion based on subcarrier spacing ($\mu$). In addition, $h_{b,f,c}(i,l)$ related to an SRS power control adjustment state may be configured or indicated based on a TPC command field of DCI (e.g. DCI format 2_3, etc.) received or detected by a terminal and/or RRC parameter (e.g., srs -PowerControlAdjustmentStates, etc.).

A resource for SRS transmission may be applied as a reference for a base station and/or a terminal to determine a beam, panel, and/or spatial domain transmission filter, considering this point, SRS transmit power control may be performed in units of beams, panels, and/or space domain transmit filters.

Parameters and/or information for the above-described SRS power control may be individually (i.e., independently) configured for each BWP. In this case, the corresponding parameters and/or information may be configured or indicated through higher layer signaling (e.g., RRC signaling, MAC-CE, etc.) and/or DCI. As an example, parameters and/or information for SRS power control may be transmitted through RRC signaling, such as SRS-Config, SRS-TPC-CommandConfig, etc., and SRS-Config and SRS-TPC-CommandConfig are configured as shown in Table 8 below.

[Table 8]

| | |
|---|---|
| SRS-Config ::= | SEQUENCE { |
| srs-ResourceSetToReleaseList | SEQUENCE (SIZE(1..maxNrofSRS-ResourceSets)) OF SRS-ResourceSetId |
| srs-ResourceSetToAddModList | SEQUENCE (SIZE(1..maxNrofSRS-ResourceSets)) OF SRS-ResourceSet |
| srs-ResourceToReleaseList | SEQUENCE (SIZE(1..maxNrofSRS-Resources)) OF SRS-ResourceId |
| srs-ResourceToAddModList | SEQUENCE (SIZE(1..maxNrofSRS-Resources)) OF SRS-Resource |
| tpc-Accumulation | ENUMERATED {disabled} |
| ... | |
| } | |
| SRS-ResourceSet = | SEQUENCE { |
| srs-ResourceSetId | SRS-ResourceSetId, |
| srs-ResourceIdList | SEQUENCE (SIZE(1..maxNrofSRS-ResourcesPerSet)) OF |
| SRS-ResourceId | |
| resourceType | CHOICE { |
| aperiodic | SEQUENCE { |

(continued)

```
      aperiodicSRS-ResourceTrigger              INTEGER (1..maxNrofSRS-TriggerStates-1),
      csi-RS                                    NZP-CSI-RS-ResourceId
      slotOffset                                INTEGER (1..32)
      ...,
      [[
      aperiodicSRS-ResourceTriggerList-v1530    SEQUENCE (SIZE(1..maxNrofSRS-
TriggerStates-2))
         ]]                                        OF INTEGER (1..maxNrofSRS-TriggerStates-1)
   }
   semi-persistent                           SEQUENCE {
   associatedCSI-RS                             NZP-CSI-RS-ResourceId
   ...,
 },
   periodic                                  SEQUENCE {
   associatedCSI-RS                             NZP-CSI-RS-ResourceId
   ...
 }
},
   usage                                     ENUMERATED {beamManagement, codebook,
                                             nonCodebook,
antennaSwitching},
   alpha                                     Alpha
   p0                                        INTEGER (-202..24)
      pathlossReferenceRS                       CHOICE {
      ssb-Index                                 SSB-Index,
      csi-RS-Index                              NZP-CSI-RS-ResourceId
   }
   srs-PowerControlAdjustmentStates          ENUMERATED { sameAsFci2, separateClosedLoop}
   ...
 }
SRS-TPC-CommandConfig =                     SEQUENCE {
   startingBitOfFormat2-3                      INTEGER (1..31)
   fieldTypeFormat2-3                          INTEGER (0..1)
   ...,
 }
   startingBitOfFormate-3SUL-v1530          INTEGER (1..31)
   ]]
 }
```

Through the method described above, a terminal may determine or calculate SRS transmission power, and may transmit an SRS using the determined or calculated SRS transmission power.

Operation related to Multi-TRPs

A coordinated multi point (CoMP) scheme refers to a scheme in which a plurality of base stations effectively control interference by exchanging (e.g., using an X2 interface) or utilizing channel information (e.g., RI/CQI/PMI/LI(layer indicator), etc.) fed back by a terminal and cooperatively transmitting to a terminal. According to a scheme used, a CoMP may be classified into joint transmission(JT), coordinated Scheduling(CS), coordinated Beamforming(CB), dynamic Point Selection(DPS), dynamic Point Blocking(DPB), etc.

M-TRP transmission schemes that M TRPs transmit data to one terminal may be largely classified into i) eMBB M-TRP transmission, a scheme for improving a transfer rate, and ii) URLLC M-TRP transmission, a scheme for increasing a reception success rate and reducing latency.

In addition, with regard to DCI transmission, M-TRP transmission schemes may be classified into i) M-TRP transmission based on M-DCI(multiple DCI) that each TRP transmits different DCIs and ii) M-TRP transmission based on S-DCI(single DCI) that one TRP transmits DCI. For example, for S-DCI based M-TRP transmission, all scheduling information on data transmitted by M TRPs should be delivered to a terminal through one DCI, it may be used in an environment of an ideal BackHaul (ideal BH) where dynamic cooperation between two TRPs is possible.

For TDM-based URLLC M-TRP transmission, scheme 3/4 is under standardization discussion. Specifically, scheme 4 means a method in which one TRP transmits a transport block (TB) in one slot, and has an effect of increasing the probability of data reception through the same TB received from multiple TRPs in multiple slots. In contrast, scheme 3 means a method in which one TRP transmits a TB through several consecutive OFDM symbols (i.e., symbol groups), and in one slot, several TRPs can be configured to transmit the same TB through different symbol groups.

In addition, a UE may recognize PUSCH (or PUCCH) scheduled by DCI received in different control resource sets(CORESETs)(or CORESETs belonging to different CORESET groups) as PUSCH (or PUCCH) transmitted to different TRPs or may recognize PDSCH (or PDCCH) from different TRPs. In addition, the below-described method for UL transmission (e.g., PUSCH/PUCCH) transmitted to different TRPs may be applied equivalently to UL transmission (e.g., PUSCH/PUCCH) transmitted to different panels belonging to the same TRP.

In addition, MTRP-URLLC may mean that the same transport block (TB) is transmitted using different layers/time/frequencies of M-TRP. A UE configured for an MTRP-URLLC transmission method may be indicated multiple TCI state(s) by DCI, and it may be assumed that data received using a QCL RS of each TCI state are the same TB. On the other hand, MTRP-eMBB may mean that M-TRP transmit different TBs using different layers/time/frequencies. A UE configured for an MTRP-eMBB transmission method may be indicated multiple TCI state(s) by DCI, and it may be assumed that data received using a QCL RS of each TCI state are different TBs. In this regard, as a UE separately uses the a RNTI configured for MTRP-URLLC and a RNTI configured for MTRP-eMBB, it is possible to consider/determine whether the corresponding M-TRP transmission is URLLC transmission or eMBB transmission. That is, when CRC masking of DCI received by a UE is performed using a RNTI configured for MTRP-URLLC, this may correspond to URLLC transmission, and when CRC masking of DCI is performed using a RNTI configured for MTRP-eMBB, this may correspond to eMBB transmission.

Hereinafter, a CORESET group ID described/mentioned in the present disclosure may mean an index/identification information (e.g., an ID, etc.) for distinguishing a CORESET for each TRP/panel. In addition, a CORESET group may be a group/union of CORESET distinguished by an index/identification information (e.g., an ID) /the CORESET group ID, etc. for distinguishing a CORESET for each TRP/panel. In an example, a CORESET group ID may be specific index information defined in a CORESET configuration. In this case, a CORESET group may be configured/indicated/defined by an index defined in a CORESET configuration for each CORESET. Additionally/alternatively, a CORESET group ID may mean an index/identification information/an indicator, etc. for distinguishment/identification between CORESETs configured/associated with each TRP/panel. Hereinafter, a CORESET group ID described/mentioned in the present disclosure may be expressed by being substituted with a specific index/specific identification information/a specific indicator for distinguishment/identification between CORESETs configured/associated with each TRP/panel. The CORESET group ID, i.e., a specific index/specific identification information/a specific indicator for distinguishment/identification between CORESETs configured/associated with each TRP/panel may be configured/indicated to a terminal through higher layer signaling (e.g., RRC signaling)/L2 signaling (e.g., MAC-CE)/L1 signaling (e.g., DCI), etc. In an example, it may be configured/indicated so that PDCCH detection will be performed per each TRP/panel in a unit of a corresponding CORESET group (i.e., per TRP/panel belonging to the same CORESET group). Additionally/alternatively, it may be configured/indicated so that uplink control information (e.g., CSI, HARQ-A/N(ACK/NACK), SR(scheduling request)) and/or uplink physical channel resources (e.g., PUCCH/PRACH/SRS resources) are separated and managed/controlled per each TRP/panel in a unit of a corresponding CORESET group (i.e., per TRP/panel belonging to the same CORESET group). Additionally/alternatively, HARQ A/N(process/retransmission) for PDSCH/PUSCH, etc. scheduled per each TRP/panel may be managed per corresponding CORESET group (i.e., per TRP/panel belonging to the same CORESET group).

For example, a higher layer parameter, ControlResourceSet information element (IE), is used to configure a time/frequency control resource set (CORESET). In an example, the control resource set (CORESET) may be related to detection and reception of downlink control information. The ControlResourceSet IE may include a CORESET-related ID (e.g., controlResourceSetID)/an index of a CORESET pool for a CORESET (e.g., CORESETPoolIndex)/a time/frequency resource configuration of a CORESET/TCI information related to a CORESET, etc. In an example, an index of a CORESET pool (e.g., CORESETPoolIndex) may be configured as 0 or 1. In the description, a CORESET group may correspond to a CORESET pool and a CORESET group ID may correspond to a CORESET pool index (e.g., CORESETPoolIndex) .

Non-coherent joint transmission (NCJT) is a method in which multiple transmission points (TPs) transmit data to one UE using the same time and frequency resource, data is transmitted through different layers (i.e., different DMRS ports) using different demodulation multiplexing reference signal (DMRS) ports between TPs.

A TP transmits data scheduling information to a UE receiving NCJT through DCI. Here, a method in which each TP participating in NCJT transmits scheduling information for data transmitted by itself through DCI is referred to as 'multi DCI based NCJT'. Since N TPs participating in NCJT transmission transmit respective DL grant DCI and PDSCHs to a UE, the UE receives N DCI and N PDSCHs from N TPs. Unlike this, a method in which one representative TP transmits scheduling information for data transmitted by itself and data transmitted by other TPs (i.e., TPs participating in NCJT) through one DCI is called 'single DCI-based NCJT'. In this case, N TPs transmit one PDSCH, but each TP transmits only some layers of multiple layers constituting one PDSCH. For example, when 4 layers data is transmitted, TP 1 may transmit 2 layers and TP 2 may transmit the remaining 2 layers to a UE.

Hereinafter, a partially overlapped NCJP will be described.

In addition, NCJT may be divided into fully overlapped NCJT in which time-frequency resources transmitted by each TP completely overlap and partially overlapped NCJT in which only some time-frequency resources are overlapped. That is, in the case of partially overlapped NCJT, data of both TP 1 and TP2 are transmitted in some time-frequency resources, and only data of one of TP 1 or TP 2 is transmitted in the remaining time-frequency resources.

Hereinafter, a method for improving reliability in Multi-TRP will be described.

As a transmission and reception method for improving reliability using transmission in a plurality of TRPs, the following two methods may be considered.

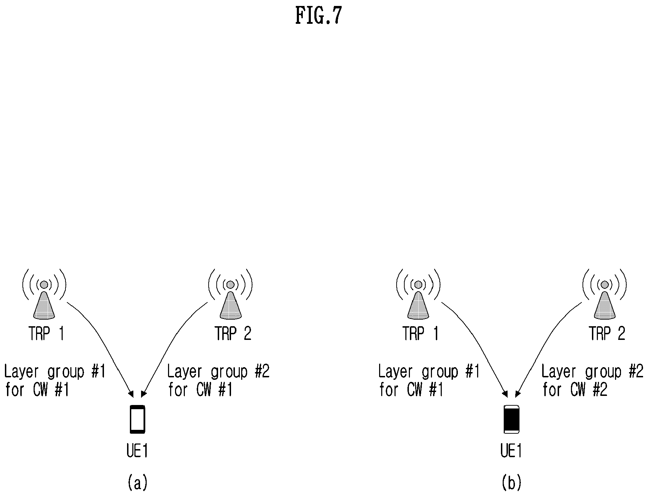

FIG. 7 illustrates a method of multiple TRPs transmission in a wireless communication system to which the present disclosure may be applied.

In reference to FIG. 7(a), it is shown a case in which layer groups transmitting the same codeword(CW)/transport block(TB) correspond to different TRPs. Here, a layer group may mean a predetermined layer set including one or more layers. In this case, there is an advantage that the amount of transmitted resources increases due to the number of a plurality of layers and thereby a robust channel coding with a low coding rate may be used for a TB, and additionally, because a plurality of TRPs have different channels, it may be expected to improve reliability of a received signal based on a diversity gain.

In reference to FIG. 7(b), an example that different CWs are transmitted through layer groups corresponding to different TRPs is shown. Here, it may be assumed that a TB corresponding to CW #1 and CW #2 in the drawing is identical to each other. In other words, CW #1 and CW #2 mean that the same TB is respectively transformed through channel coding, etc. into different CWs by different TRPs. Accordingly, it may be considered as an example that the same TB is repetitively transmitted. In case of FIG. 7(b), it may have a disadvantage that a code rate corresponding to a TB is higher compared to FIG. 7(a). However, it has an advantage that it may adjust a code rate by indicating a different RV (redundancy version) value or may adjust a modulation order of each CW for encoded bits generated from the same TB according to a channel environment.

According to methods illustrated in FIG. 7(a) and FIG. 7(b) above, probability of data reception of a terminal may be improved as the same TB is repetitively transmitted through a different layer group and each layer group is transmitted by a different TRP/panel. It is referred to as a SDM (Spatial Division Multiplexing) based M-TRP URLLC transmission method. Layers belonging to different layer groups are respectively transmitted through DMRS ports belonging to different DMRS CDM groups.

In addition, the above-described contents related to multiple TRPs are described based on an SDM (spatial division multiplexing) method using different layers, but it may be naturally extended and applied to a FDM (frequency division multiplexing) method based on a different frequency domain resource (e.g., RB/PRB (set), etc.) and/or a TDM (time division multiplexing) method based on a different time domain resource (e.g., a slot, a symbol, a sub-symbol, etc.).

Uplink transmission and reception method

According to 3GPP standards up to NR Rel-17, a maximum number of uplink Tx antennas of a UE is 4, and up to 4 layers are supported for data transmission (PUSCH). In the Rel-18 RAN1 MIMO discussion, standardization to support data transmission of more than 4 layers using 8 Tx antennas in consideration of UEs such as not only hand-held terminals, but also home terminals (CPE: customer premises equipment) / fixed wireless access (FWA) / vehicles / industrial devices is planned to proceed. Accordingly, enhancement for transmitting up to 8 layers in codebook based transmission and non-codebook based transmission, which are PUSCH transmission methods of the NR, is planned, for codebook based transmission, an uplink codebook supporting 8 ports can be newly introduced in the standardization process. In non-codebook based transmission, in addition to up to 4 (non-codebook based) SRS resources, up to 8 SRS resources may need to be indicated through an SRS resource indicator (SRI) indication previously used for up to 4 layer PUSCH scheduling. However, in order to indicate a combination of up to 8 SRS resources for a single PUSCH, an SRI field size of existing UL grant DCI is insufficient, and an excessively large SRI field size may be required to support all combinations.

An SRI field codepoint configuration of current UL grant DCI for non-codebook based transmission may be determined by RRC parameter configurations ($L_{max}$, $N_{srs}$) as follows.

Here, $L_{max}$ is given by a field/parameter (e.g., maxMIMO-Layers) indicating a maximum number of MIMO layers used for a PUSCH in all BWPs of a corresponding uplink of a corresponding serving cell in a configuration (e.g., PUSCH-ServingCellConfig) to specify common UE-specific PUSCH parameters across BWPs of UEs in a serving cell. If the above parameter is not configured, $L_{max}$ is given by a maximum number of PUSCH layers supported by a UE for a serving cell for non-codebook based operation.

In addition, $N_{SRS}$ is the number of SRS resources configured in an SRS resource set indicated by an SRS resource set indicator, if there is the SRS resource set indicator. Otherwise, a higher layer parameter (e.g., usage), which indicates a use of an SRS, has a 'noncodebook' value, and it is associated with the higher layer parameter and is the number of SRS resources configured in an SRS resource set configured by higher layer signaling.

Table 9 illustrates an SRI indication for non-codebook based PUSCH transmission when $L_{max}$ = 1.

[Table 9]

| Bit field mapped to index | SRI (s), $N_{SRS}$=2 | Bit field mapped to index | SRI (s), $N_{SRS}$=3 | Bit field mapped to index | SRI (s), $N_{SRS}$=4 |
|---|---|---|---|---|---|
| 0 | 0 | 0 | 0 | 0 | 0 |
| 1 | 1 | 1 | 1 | 1 | 1 |
| | | 2 | 2 | 2 | 2 |
| | | 3 | reserved | 3 | 3 |

Table 10 illustrates an SRI indication for non-codebook based PUSCH transmission when $L_{max}$ = 2.

[Table 10]

| Bit field mapped to index | SRI (s), $N_{SRS}$=2 | Bit field mapped to index | SRI (s), $N_{SRS}$=3 | Bit field mapped to index | SRI (s), $N_{SRS}$=4 |
|---|---|---|---|---|---|
| 0 | 0 | 0 | 0 | 0 | 0 |
| 1 | 1 | 1 | 1 | 1 | 1 |
| 2 | 0,1 | 2 | 2 | 2 | 2 |
| 3 | reserved | 3 | 0,1 | 3 | 3 |
| | | 4 | 0,2 | 4 | 0,1 |
| | | 5 | 1,2 | 5 | 0,2 |
| | | 6-7 | reserved | 6 | 0,3 |
| | | | | 7 | 1,2 |
| | | | | 8 | 1,3 |
| | | | | 9 | 2,3 |
| | | | | 10-15 | reserved |

Table 11 illustrates an SRI indication for non-codebook based PUSCH transmission when $L_{max}$ = 3.

[Table 11]

| Bit field mapped to index | SRI (s), $N_{SRS}$=2 | Bit field mapped to index | SRI (s), $N_{SRS}$=3 | Bit field mapped to index | SRI (s), $N_{SRS}$=4 |
|---|---|---|---|---|---|
| 0 | 0 | 0 | 0 | 0 | 0 |
| 1 | 1 | 1 | 1 | 1 | 1 |
| 2 | 0,1 | 2 | 2 | 2 | 2 |
| 3 | reserved | 3 | 0,1 | 3 | 3 |
| | | 4 | 0,2 | 4 | 0,1 |

(continued)

| Bit field mapped to index | SRI (s), $N_{SRS}=2$ | Bit field mapped to index | SRI (s), $N_{SRS}=3$ | Bit field mapped to index | SRI (s), $N_{SRS}=4$ |
|---|---|---|---|---|---|
| | | 5 | 1,2 | 5 | 0,2 |
| | | 6 | 0,1,2 | 6 | 0,3 |
| | | 7 | reserved | 7 | 1,2 |
| | | | | 8 | 1,3 |
| | | | | 9 | 2,3 |
| | | | | 10 | 0,1,2 |
| | | | | 11 | 0,1,3 |
| | | | | 12 | 0,2,3 |
| | | | | 13 | 1,2,3 |
| | | | | 14-15 | reserved |

Table 12 illustrates an SRI indication for non-codebook based PUSCH transmission when $L_{max}=4$.

[Table 12]

| Bit field mapped to index | SRI (s), $N_{SRS}=2$ | Bit field mapped to index | SRI (s), $N_{SRS}=3$ | Bit field mapped to index | SRI (s), $N_{SRS}=4$ |
|---|---|---|---|---|---|
| 0 | 0 | 0 | 0 | 0 | 0 |
| 1 | 1 | 1 | 1 | 1 | 1 |
| 2 | 0,1 | 2 | 2 | 2 | 2 |
| 3 | reserved | 3 | 0,1 | 3 | 3 |
| | | 4 | 0,2 | 4 | 0,1 |
| | | 5 | 1,2 | 5 | 0,2 |
| | | 6 | 0,1,2 | 6 | 0,3 |
| | | 7 | reserved | 7 | 1,2 |
| | | | | 8 | 1,3 |
| | | | | 9 | 2,3 |
| | | | | 10 | 0,1,2 |
| | | | | 11 | 0,1,3 |
| | | | | 12 | 0,2,3 |
| | | | | 13 | 1,2,3 |
| | | | | 14 | 0,1,2,3 |
| | | | | 15 | reserved |

As shown in Table 12 above, 15 entries are required to support all combinations of 4 SRS resource indicators (SRIs) for supporting up to 4 layers, so an SRI field of up to 4 bits is defined for non-codebook based transmission. If 8 SRIs are supported to support up to 8 layers, the existing SRI field size may not be enough and too many bits may be required to support all combinations of 8 SRIs.

The present disclosure proposes a method for supporting up to 8 layer transmission by utilizing 8 Tx antennas in uplink transmission of a UE based on the above problem, and proposes an up to 8 layer scheduling configuration/indication for a UE of a base station and a subsequent uplink transmission method for a UE.

In the present disclosure, '/' may be interpreted as 'and', 'or', or 'and/or' depending on the context.

Hereinafter, in the present disclosure, "transmission of an SRS resource set" may be used in the same meaning as "transmission of an SRS based on information configured in an SRS resource set". In addition, "transmitting an SRS resource" or "transmitting SRS resources" may be used in the same meaning as "transmitting an SRS or SRSs based on information configured in an SRS resource".

In Rel-17 MIMO, for S-DCI (single DCI) based M-TRP PUSCH transmission, enhancement was performed to apply different beams (i.e., spatialRelationInfo) and different power control (PC) parameter sets to PUSCH transmission occasions (TOs) (or TO groups) for each TRP. Here, it has been improved to configure up to two CB (codebook)/NCB (non-codebook) based SRS resource sets to apply different beams / PCs (up to one SRS resource set up to Rel-16). In addition, enhancement was performed so that a base station can indicate an SRI (i.e., indicating a beam and a PC) corresponding to each target TRP during CB/NCB based UL transmission by extending an SRI field in UL grant DCI by up to 2.

As shown in Table 13 below, an SRS resource set indication field was also newly introduced to UL grant DCI to indicate a method of utilizing the two SRI fields.

[Table 13]

| Bit field mapped to index | SRS resource set indication |
|---|---|
| 0 | i) SRS resource indicator field and ii) Precoding information and number of layers field are associated with the first SRS resource set; |
| | i) Second SRS resource indicator field and ii) Second Precoding information field are reserved. |
| 1 | i) SRS resource indicator field and ii) Precoding information and number of layers field are associated with the second SRS resource set; i) Second SRS resource indicator field and ii) Second Precoding information field are reserved. |
| 2 | i) SRS resource indicator field and ii) Precoding information and number of layers field are associated with the first SRS resource set; i) Second SRS resource indicator field and ii) Second Precoding information field are associated with the second SRS resource set. |
| 3 | i) SRS resource indicator field and ii) Precoding information and number of layers field are associated with the first SRS resource set; i) Second SRS resource indicator field and ii) Second Precoding information field are associated with the second SRS resource set. |
| NOTE 1: The first and the second SRS resource sets are respectively the ones with lower and higher srs-ResourceSetId of the two SRS resources sets configured by higher layer parameter srs-ResourceSetToAddModList or srs-ResourceSetToAddModListDCI-0-2, and associated with the higher layer parameter usage of value 'nonCodeBook' if txConfig=nonCodebook or 'codeBook' if txConfig=codebook. When only one SRS resource set is configured by higher layer parameter srs-ResourceSetToAddModList or srs-ResourceSetToAddModListDCI-0-2, and associated with the higher layer parameter usage of value 'codeBook' or 'nonCodeBook' respectively, the first SRS resource set is the SRS resource set. The association of the first and second SRS resource sets to PUSCH repetitions for each bit field index value is as defined in Clause 6.1.2.1 of TS 38.214. NOTE 2: For DCI format 0_2, the first and second SRS resource sets configured by higher layer parameter srs-ResourceSetToAddModListDCI-0-2 are composed of the first $N_{SRS,0\_2}$ SRS resources together with other configurations in the first and second SRS resource sets configured by higher layer parameter srs-ResourceSetToAddModList, if any, and associated with the higher layer parameter usage of value 'codeBook' or 'nonCodeBook', respectively, except for the higher layer parameters 'srs-ResourceSetId' and 'srs- | |
| ResourceIdList'. | |

If DCI format 0_1 or DCI format 0_2 indicates codepoint '10' for an SRS resource set indication field (case of 2 in Table 13), an association for the first and second SRS resource sets with K consecutive slots is determined as follows:

- K = 2, the first and second SRS resource sets are applied to the first and second slots of two continuous slots.
- If K > 2 and cyclicMapping in PUSCH-Config is enabled, the first and second SRS resource sets are respectively applied to the first and second slots of K consecutive slots, and the same SRS resource set mapping pattern continues to the remaining slots of the K consecutive slots.
- If K > 2 and sequentialMapping in PUSCH-Config is enabled, the first SRS resource set is applied to the first and second slots of K consecutive slots, the second SRS resource set is applied to the third and fourth slots of the K consecutive slots, and the same SRS resource set mapping pattern continues for the remaining slots of the K consecutive slots.

In addition, if DCI format 0_1 or DCI format 0_2 indicates codepoint '11' for an SRS resource set indication field (in the case of 3 in Table 13), an association of the first and second SRS resource sets with K consecutive slots is determined as follows:

- When K = 2, the second and first SRS resource sets are applied to the first and second slots of two consecutive slots, respectively.
- If K > 2 and cyclicMapping in PUSCH-Config is enabled, the second and first SRS resource sets are applied to the first and second slots of K consecutive slots, respectively, and the same SRS resource set mapping pattern continues for the remaining slots of the K consecutive slots.
- if K > 2 and sequentialMapping in PUSCH-Config is enabled, the second SRS resource set is applied to the first and second slots of K consecutive slots, the first SRS resource set is applied to the third and fourth slots of the K consecutive slots, and the same SRS resource set mapping pattern continues for the remaining slots of K consecutive slots.

Hereinafter, the present disclosure mainly proposes a method for supporting 8 Tx UL transmission when there is one SRI field in UL grant DCI in NCB (non-codebook) based transmission, the present disclosure can be equivalently applied to the case where there are two SRI fields in DCI and/or CB (codebook) based transmission.

Embodiment 1. For an SRS resource configured in an SRS resource set for non-codebook (NCB) usage, a method for allowing configuration of a plurality of SRS ports and configuring/indicating PUSCH transmission of 4 or more ranks and 4 or more layers

Embodiment 1-1: For an SRS resource configured in an SRS resource set for non-codebook (NCB) usage, two or more ports may be configured/defined to be possible. In addition, in order to support PUSCH scheduling of 5 or more ranks, (always) two (or/and two or more) SRS resources may be specified/defined to configure/indicate.

For example, in two (or/and two or more) SRS resources, a port number combination can be defined/specified/configured as follows.

- Rank 5: 3 ports resource + 2 ports resource and/or 4 ports resource + 1 port resource
- Rank 6: 4 port resource + 2 ports resource and/or 3 ports resource + 3 ports resource
- Rank 7: 4 ports resource + 3 ports resource
- Rank 8: Supported only with two 4 ports resources

By defining/specifying/configuring an SRS resource combination to support PUSCH transmission of 5 or more ranks as above, only limited combinations of SRIs can be mapped/associated to an SRI field for PUSCH indication of 5 or more ranks. Therefore, a base station can perform PUSCH scheduling of 5 or more ranks through an SRI field by reusing the same size of the existing SRI field or without significantly increasing from the existing SRI field.

Embodiment 1-2: It is possible to configure a maximum of 2 ports for an SRS resource configured in an SRS resource set for non-codebook (NCB) usage. By enabling a configuration of max 2 ports for an SRS resource for NCB usage that a configuration of max 1 port were maximum, it is possible to support max 8 ports (and/or max 8 layers) PUSCH by using only a size of the existing SRI field by configuring up to four 2-ports SRS resources in an SRS resource set for NCB usage.

In this case, in legacy operation, by using up to four 1-port SRS resources, based on the associated CSI-RS configured in an SRS resource set, a UE calculated a precoder of each 1-port SRS resource and transmitted the SRS resource for NCB usage. However, in this embodiment, according to configuration, a UE can calculate a 1-port precoder for a 1-port SRS resource, and a UE can calculate a 2-ports precoder for a 2-ports SRS resource.

Here, when a 2-ports SRS resource exists in an SRS resource set for NCB usage, when a base station performs PUSCH scheduling, it may want to use only a part of 1 port among 2 ports of the corresponding SRS resource for PUSCH scheduling while indicating an SRI corresponding to the corresponding 2-ports SRS resource through DCI. In order to solve this problem, the following options may be used for PUSCH scheduling of a base station.

Option 1) When a base station indicates an SRI using an additional 1 or 2 bits in addition to an SRI field of UL grant DCI, it can indicate whether to utilize all 2 ports or only 1 port for a 2-ports SRS resource in an SRS resource set for NCB usage. Here, if an additional 1 bit is used, a value of the corresponding 1-bit can be configured/defined as, for example, "0" = "Both 2 ports are used for PUSCH transmission", "1" = "Only 1 port that is predefined/preconfigured among 2 ports is used for PUSCH transmission". In this case, the predefined/preconfigured 1 port may correspond to the lowest/highest port (i.e., port index). If additional 2 bits are utilized, a value of the corresponding 2 bits can be configured/defined as, for example, "00" = "Both 2 ports are not used for PUSCH transmission", "01" = "Use the lowest/first port among 2 ports for PUSCH transmission" , "10" = "Use the highest/second port among 2 ports for PUSCH transmission" , "11" = "Use both ports for PUSCH transmission".

Option 2) When indicating an SRI through an additional 1 bit in addition to an SRI field of UL grant DCI, for all SRS resources in an SRS resource set for NCB usage, a base station may indicate whether to utilize an SRS resource having an even (local) index or an SRS resource having an odd (local) index. For example, it may be configured/defined as "0" = "Only SRS resources with an odd index among SRS resources (indicated by SRI) are used for PUSCH transmission", "1" = "Only SRS resources with an even index among SRS resources (indicated by SRI) are used for PUSCH transmission".

Option 3) When a base station indicates an SRI through an additional 1 bit in addition to an SRI field of UL grant DCI, any one port can be dropped for a specific 2-ports SRS resource in an SRS resource set for NCB usage. Accordingly, when an SRS resource for NCB usage is configured only with 2-ports SRS resources, it may be indicated to support an even layer. For example, it may be configured/defined as "0" = "For a specific resource among 2-ports SRS resources (indicated by SRI), both 2 ports are used for PUSCH transmission", "1" = "For a specific resource among 2-ports SRS resources (indicated by SRI), only 1 port are used for PUSCH transmission",

Embodiment 1-3: For a specific SRS resource configured in an SRS resource set for non-codebook (NCB) usage, it is possible to configure (max) 4 ports. A base station may perform max 8 port SRI indication by configuring up to 4 additional 1-port SRS resources in an SRS resource set for NCB usage. The 4-ports SRS resource may be used for i) up to 4-layers PUSCH transmission or ii) for 4-layers or more PUSCH transmission. For the 4-ports SRS resource, a field for indicating which of the 4 port(s) is to be scheduled for PUSCH transmission may be separately present/defined in UL grant DCI (For the remaining four 1-port SRS resources, an SRI indication may be performed by the existing SRI field). In the case of method i, if a base station does not want to indicate 4 or more layers PUSCH, PUSCH scheduling can be performed by saving a DCI payload of the existing SRI field by not configuring the remaining four 1-port SRS resources and utilizing only the separate field. In the case of method ii, if a base station does not want to indicate a 4 or more layers PUSCH, by not configuring the 4-port SRS resource, a DCI payload can be saved and PUSCH scheduling can be performed using only the existing SRI field.

Embodiment 2. All SRS resources configured in an SRS resource set for non-codebook (NCB) usage may be configured as 1-port SRS resources. In addition, the following options can be used for PUSCH scheduling in order to indicate a combination of max 8 SRS resources in a single SRI field.

Option 1) Since the number of all possible combinations of max 8 SRS resources in an SRS resource set for NCB usage is 8C1+8C2+8C3+8C4+8C5+8C6+8C7+8C8 = 255 (which can be expressed in 8 bits), there is overhead to implement all SRI(s) combinations corresponding to 255 entries in the standard document and base station/UE implementation. To prevent this, a max 8-bit SRI field is configured in UL grant DCI, and a base station may indicate all/some of 8 SRS resources from the lowest resource (i.e., an SRS resource with the lowest index) in the form of a full-bitmap. If resources from SRS resource #0 to #7 are configured in an SRS resource set for NCB usage, when indicating resource #0 and #2, a base station can schedule 2 ranks PUSCH transmission by indicating "10100000" in a max 8-bit SRI field of UL grant DCI during PUSCH scheduling.

Option 2) The number of combinations of SRS resources for each rank may be limited by defining/specifying/configuring only some combinations among all possible combinations of max 8 SRS resources in an SRS resource set for NCB usage. As for the limitation of the combination, i) an SRI field size and a table for expressing/indicating SRI field entries can be simplified by defining/configuring only some 8Cx from 8C1 to 8C8 to be supported. For example, by defining/configuring not to support 8C3, 8C5, 8C7, etc., an SRI field may use only max 7 bits to support 135 entries. And/or, as for the limitation of the combination, ii) an SRI field size and a table for expressing/indicating SRI field entries can be simplified by defining/configuring to support only some combinations in a specific 8Cx. Some of the supported combinations may be configured using a method in which a specific (lowest) SRS port having excellent RF (radio frequency) implementation such as power amplifier (PA) performance, etc. is prioritized, accordingly, an SRI field size can be saved. For example, a 2 ranks SRI may be configured to unconditionally include an SRS resource with a local index 0 for 8C2 combinations (i.e., [0,1], [0,2], [0,3], [0,4], [0,5], [0,6], [0,7]).

Option 3) A base station may configure up to 8 SRS resources in an SRS resource set for NCB usage through RRC signaling. In addition, a base station may perform a sub-selection operation adaptively to a UL channel environment through a MAC control element (CE) that activates some SRS resource(s) among 8 SRS resources for an SRI field indication. In the MAC CE message, for example, a field for selecting some SRS resource(s) among the 8 SRS resources in a single octet may be present/defined. A size of an SRI field may be adaptively variable through the MAC CE.

Option 4) A base station may configure up to 8 SRS resources in an SRS resource set for NCB usage through RRC signaling. In addition, a base station can utilize an SRI field of max 8 bits for PUSCH scheduling. Here, if two SRI fields are used, such as Rel-17 S-DCI based M-TRP PUSCH transmission, when "00" (i.e., '0' in Table 13) or "01" (i.e., '1' in Table 13) is indicated by the above-described SRS resource set indicator field and S-TRP PUSCH transmission scheduling is performed, a base station may use all of the max 8-bits SRI field for PUSCH transmission. On the other hand, when "10" (i.e., '2' in Table 13) or "11" (i.e., '3' in Table 13) is indicated by the above-described SRS resource set indicator field, and M-TRP PUSCH transmission scheduling is performed, a base station may perform two SRI indications for M-TRP PUSCH transmission in a manner in which the max 8 bits are divided into 2 SRI fields of 4 bits + 4 bits. In the method in which the 8 bits are divided into two SRI fields by 4 bits, the SRI field saving method of the above embodiments may be utilized, or it may be limited to performing scheduling of up to 4-layers PUSCH per TRP. Accordingly, a method of scheduling a max 4-layers PUSCH with a max 4-bits SRI field for each target TRP can be utilized. And/or, when the max 8 bits are divided into two SRI fields, such as 4 bits + 4 bits, layers of each PUSCH for each target TRP may be limited to max 4. In this case, 4-layers transmission can be supported with 4 bits of each SRI field without any problem.

Embodiment 3: Two SRI fields utilized in Rel-17 S-DCI based M-TRP PUSCH transmission may be utilized for up to 8 Tx PUSCH scheduling. Since a base station can indicate up to 4 SRIs in each SRI field with a maximum of 4 bits + 4-bit combinations, it can schedule up to 8 layers (S-TRP) PUSCH. Here, since the scheduling corresponds to the S-TRP PUSCH scheduling, SRI(s) mapped/associated to two SRI fields may be configured in a single SRS resource set, not divided into two SRS resource sets (for NCB usage), and the same power control parameter set configuration may be applied for SRS transmission. And/or even if SRIs mapped/associated to two SRI fields are divided into two SRS resource sets (for NCB usage), i) a UE can expect the PC parameter set to be configured only for a specific one (e.g., the first (and/or lowest indexed) SRS resource set) of the two SRS resource sets. Alternatively, even if SRIs mapped/associated to two SRI fields are divided into two SRS resource sets (for NCB usage), ii) a UE may not expect different PC parameter sets to be configured for the two SRS resource sets. Alternatively, even if SRIs mapped/associated to two SRI fields are divided into two SRS resource sets (for NCB usage), iii) even if different PC parameter sets are configured in the two SRS resource sets, a UE may follow only one specific PC parameter set (e.g., a PC parameter set associated with the first (and/or lowest indexed) SRS resource set) among the two sets.

If max 8 SRS resources are configured in a single SRS resource set, in the max 8 SRS resources in the single SRS resource set, a connection/association method in which n (n is a natural number) resource(s) from an SRS resource having the lowest index are mapped to the first SRI field, and the remaining resource (s) are mapped to the second SRI field, etc. may be defined/configured/performed. In addition, in two SRI fields for the existing M-TRP PUSCH operation, two different PC parameter set(s) (e.g., two sri-PUSCH-MappingToAddModList) are mapped to each SRI field. However, in the present embodiment, since single power control for an S-TRP PUSCH should be performed, only a single PC parameter set (e.g., a single sri-PUSCH-MappingToAddModList) may be configured for only one specific SRI field (e.g., the first or lowest SRI field). And/or a may expect such operation (i.e., a UE may not expect two sri-PUSCH-Mapping-ToAddModList configurations). And/or, even if two different PC parameter set(s) (e.g., two sri-PUSCH-MappingToAddModList) are mapped/configured/associated to each SRI field, a UE may follow only the first (or lowest) parameter set(s) (e.g., the first/lowest sri-PUSCH-MappingToAddModList) among the different PC parameter set(s) (e.g., PUSCH power control indication may be performed only by a codepoint of the first/lowest SRI field).

Even if two SRI fields are configured as above, i) if only one SRS resource set for CB/NCB is configured, or ii) if two SRS resource sets are configured, but a PC parameter is configured for only one SRS resource set, or iii) if a PC parameter set for PUSCH associated with an SRI field is configured only in one SRI field, a UE may consider/determine that a base station intends to utilize the two SRI fields for 8 Tx UL transmission for S-TRP purposes, and the above-described operations may be performed. If, as described above, if two SRI fields are used for 8 Tx UL transmission, all or some of fields (e.g., an SRS resource set indication field, a second phase tracking reference signal (PT-RS) indication field, a first or second TPC field) present/defined for M-TRP PUSCH transmission scheduling may not be configured for UL grant DCI. Alternatively, even if the fields are configured, they may be considered unused fields, or the corresponding unused fields may be used to indicate max 8 SRI(s) combinations.

More specifically, for a method of supporting 8 Tx UL transmission by utilizing two SRI fields of existing Rel-17, i) a method of utilizing a specific SRS resource set among two (CB or NCB) SRS resource sets configured for two SRI fields and ii) a method of utilizing all of two (CB or NCB) SRS resource sets configured for two SRI fields are proposed.

As shown in Table 13, two SRI fields may have an association/correspondence relationship with two preconfigured SRS resource sets. When an SRS resource set indication field is '0' or '1', S-TRP (PUSCH repetition) transmission may be performed by utilizing the first SRS resource set or the second SRS resource set (among two SRS resource sets). In addition, when an SRS resource set indication field is '2' or '3', M-TRP PUSCH repetition is performed, and depending on whether it is '2 ' or '3', a mapping order between two SRS resource sets and transmission occasion (TO) groups may change (e.g., in the case of '2', the first SRS resource set may correspond to the first TO group, and the second SRS resource set may correspond to the second TO group. or, in the case of '3', the second SRS resource set may correspond to the first TO group and the first SRS resource set may correspond to the second TO group).

In the existing Rel-17, a maximum number of SRS ports that can be configured in a specific SRS resource set among two SRS resource sets is 4, for method i, a maximum number of SRS ports that can be configured in a specific SRS resource set can be increased to 8. That is, when an SRS resource set indication field is '0' or '1', a base station utilizes SRS resource(s) of up to 8 ports configured in each SRS resource set among two SRS resource sets to perform S-TRP 8 Tx UL PUSCH scheduling. In this case, up to 8 Tx PUSCH can be scheduled (up to 8 bits) using codepoints of a reserved SRI field among two SRI fields. However, when an SRS resource set indication field is '2' or '3', the existing Rel-17 M-TPR PUSCH repetition operation can be scheduled by using only 4 ports (of the configured 8 ports SRS resource(s)) in each SRS resource set among two SRS resource sets for M-TRP PUSCH repetition transmission. In order to utilize only 4 ports of 8 ports resource(s) configured in the specific SRS resource set for M-TRP transmission, for the case of NCB, up to 4 (1-port) SRS resources with the lowest ID (identity) can be utilized (to be mapped to each SRI field). For the case of CB, (when an 8-port SRS resource is configured), only the lowest 4 ports of an SRS resource may be utilized for PUSCH scheduling or (when multiple 4-ports SRS resources are configured to support 8-ports) the lowest SRS resources may be utilized (to be mapped to each SRI field).

In the case of method ii, two SRS resource sets, each including up to 4 ports configured for Rel-17 M-TRP PUSCH, are utilized as they are, and when an SRS resource set indication field is '0' or '1', both SRS resource sets can be used for S-TRP PUSCH transmission. Accordingly, PUSCH scheduling may be performed by utilizing SRS resource(s) corresponding to up to 8 ports included in two SRS resource sets. In this case, even a reserved SRI field among two SRI fields may be used for PUSCH scheduling. In addition, as proposed above, a) each PUSCH PC parameter set configured/associated to each codepoint indicated by the first SRI field and the second SRI field may be the same PC parameter set. Alternatively, b) a PUSCH PC parameter set may be configured/associated only to one specific codepoint among each codepoint indicated by each SRI field. In this case, a UE considers/understands that up to 8 ports SRS resource(s) using the two SRI fields are used for 8 Tx S-TRP PUSCH transmission, and can perform subsequent up to 8 layer PUSCH transmission.

As another example, similar to Embodiment 3, up to 8-layers PUSCH scheduling is performed using two SRI fields, but a base station can configure the number of SRIs that can be mapped to the first SRI field to (at least) 4. Accordingly, a UE may consider/determine that the second SRI field is activated and read/decode the second SRI field only when the first SRI field indicates 4 ranks (4C4) (e.g., the entry corresponding to index 14 in Table 12). That is, as 4 layers are indicated from the first SRI field and layer X is indicated from the second SRI field, PUSCH scheduling of 4+X layers is possible (i.e., combinations such as 3 layers + 3 layers and 3 layers + 2 layers cannot be supported). Here, a UE may not perform decoding on the second SRI field when the second SRI field is not activated. A size of the second SRI field may be defined/configured by a corresponding Y value when a UE supports up to Y layers, and/or may be defined/configured by the number of SRS resources configured in (one or two) SRS resource sets for NCB usage. For example, even if the configured number of SRS resources is 8, for example, if Y is 5, the first SRI field may be composed of 4 bits to support a combination of 4 SRIs, and the second SRI field may be composed of 2 bits according to a combination of 4C1 to support the remaining one SRI combination with 4 SRS resources.

The above-described operations can be used for dynamic grant (DG)/configured grant (CG)-PUSCH scheduling. For example, since Type 1 CG-PUSCH is activated through an RRC configuration, as described above, a PC parameter set indication for 4 or more layers PUSCH transmission and/or an SRI(s) combination may be configured/indicated in an RRC IE related to the corresponding CG-PUSCH.

The above embodiments/proposed methods may be utilized alone, or a combination of at least two or more embodiments/proposed methods may be utilized for an operation between a base station and a UE.

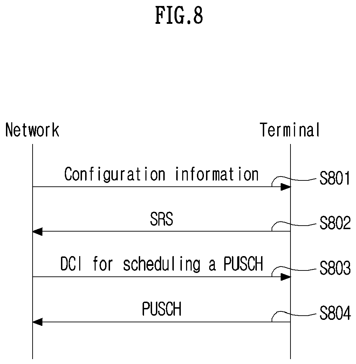

FIG. 8 is a diagram illustrating a signaling procedure for a method for transmitting and receiving a PUSCH according to an embodiment of the present disclosure.

The after-described FIG. 8 illustrates signaling between a network (e.g., TRP 1, TRP 2) and a terminal (i.e., UE) in a situation of multiple TRPs (i.e., M-TRPs, or multiple cells, hereinafter, all TRPs may be replaced with a cell) that methods proposed in the present disclosure (e.g., any one or a combination of one or more of Embodiment 1, Embodiment 2, Embodiment 3 and the detailed embodiments for Embodiments 1 to 3) may be applied.

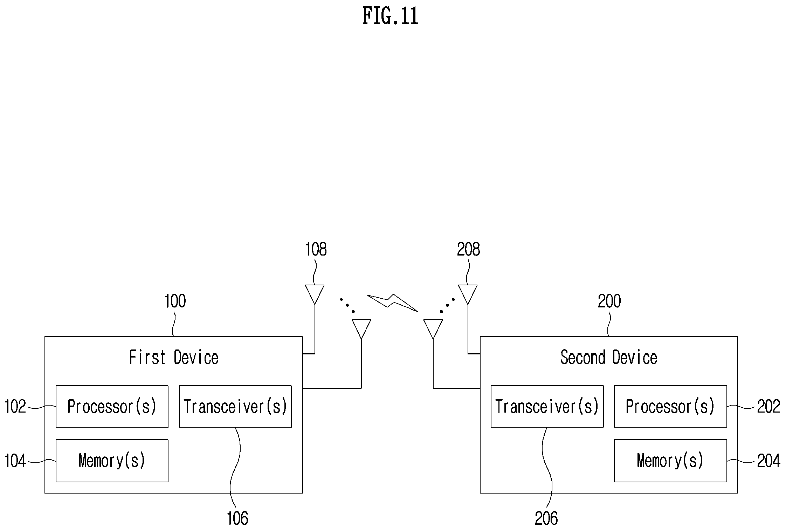

Here, a terminal/network is just an example, and may be applied by being substituted with a variety of devices as described in the after-described FIG. 11. FIG. 8 is just for convenience of a description, and do not limit a scope of the present disclosure. In addition, some step(s) shown in FIG. 8 may be omitted according to a situation and/or a configuration, etc.

In reference to FIG. 8, for convenience of a description, signaling between 2 TRPs and a terminal is considered, but a corresponding signaling method may be extended and applied to signaling between multiple TRPs and multiple terminals. In the following description, a network may be one base station including a plurality of TRPs or may be one cell including a plurality of TRPs. In an example, an ideal/a non-ideal backhaul may be configured between TRP 1 and TRP 2 configuring a network. In addition, the following description is described based on multiple TRPs, but it may be equally extended and applied to transmission through multiple panels. In addition, in the present disclosure, an operation that a terminal receives a signal from TRP1/TRP2 may be interpreted/described (or may be an operation) as an operation that a terminal receives a signal from a network (through/with TRP1/2) and an operation that a terminal transmits a signal to TRP1/TRP2 may be interpreted/described (or may be an operation) as an operation that a terminal transmits a signal to a network (through/with TRP1/TRP2) or may be inversely interpreted/described.

In addition, as described above, a "TRP" may be applied by being substituted with an expression such as a panel, an antenna array, a cell (e.g., a macro cell/a small cell/a pico cell, etc.), a TP (transmission point), a base station (gNB, etc.), etc. As described above, a TRP may be classified according to information on a CORESET group (or a CORESET pool) (e.g., an index, an identifier (ID)). In an example, when one terminal is configured to perform transmission and reception with multiple TRPs (or cells), it may mean that multiple CORESET groups (or CORESET pools) are configured for one terminal. Such a configuration on a CORESET group (or a CORESET pool) may be performed through higher layer signaling (e.g., RRC signaling, etc.). In addition, a base station may generally mean an object which performs transmission and reception of data with a terminal. For example, the base station may be a concept including one or more transmission points (TPs), one or more transmission and reception points (TRPs), etc. In addition, the TP and/or the TRP may include a panel of a base station, a transmission and reception unit, etc.

A terminal receives configuration information related to an SRS through/using TRP 1 (and/or TRP 2) from a network (S801).

The configuration information may include information related to a configuration of a network (i.e., a TRP configuration), resource (resource allocation) information related to Multiple TRP-based transmission and reception, etc. Here, the configuration information may be transmitted through higher layer signaling (e.g., RRC signaling, MAC-CE, etc.). In addition, when the configuration information is predefined or preconfigured, a corresponding step may be omitted.

For example, the configuration information may be configuration information related to SRS transmission described in the above-described proposed methods (e.g., any one or a combination of one or more of Embodiment 1, Embodiment 2, Embodiment 3 and the detailed embodiments for Embodiments 1 to 3). In this case, the configuration information may include individual information about one or more SRS resource sets. The one or more SRS resource sets may i) include only SRS resource sets for codebook usage, or ii) include only SRS resource sets for non-codebook usage, or iii) include one or more SRS resources sets for codebook usage and one or more SRS resource sets for non-codebook usage.

Information on each SRS resource set may include information (e.g., ID, index) on one or more SRS resources included in a corresponding SRS resource set, a power control parameter set for determining SRS transmission power for a corresponding SRS resource set, and a usage of an SRS resource set (e.g., any one of beam management, codebook based transmission, non-codebook based transmission, and antenna switching), etc. Here, a power control parameter set may include at least one of for example, a P0 value for SRS power control, a reference signal (e.g., SS block, CSI-RS) used for estimating SRS path loss, and an alpha value for SRS power control. For example, the configuration information may correspond to SRS-Config in Table 8.

In addition, the configuration information may be configuration information related to PUSCH transmission described in the above-described proposed methods (e.g., any one or a combination of one or more of Embodiment 1, Embodiment 2, Embodiment 3 and the detailed embodiments for Embodiments 1 to 3). In this case, the configuration information related to SRS transmission and the configuration information related to PUSCH transmission may be transmitted as separate information.

The configuration information related to PUSCH transmission may include information indicating whether the PUSCH transmission is codebook-based transmission or non-codebook-based transmission. For example, if txConfig has a codebook value, codebook-based PUSCH transmission may be indicated, and if txConfig has a non-codebook value, non-codebook-based PUSCH transmission may be indicated.

The configuration information related to PUSCH transmission may include a power control parameter set for determining transmission power of the PUSCH. Here, a power control parameter set may include at least one of an identifier (ID) of power p0 configured by the base station for the PUSCH, a pathloss reference signal (RS) identifier (ID), and/or a closed-loop index. In addition, the configuration information related to PUSCH transmission may include a power control parameter set for an SRS resource set indicated by an SRI field in order to determine transmission power of the PUSCH. For example, the configuration information may correspond to PUSCH-ConfigCommon and/or PUSCH-PowerControl of Table 7.

Based on the configuration information, a terminal transmits an SRS to a network on a plurality of SRS resources in each of the one or more SRS resource sets (S802).

A terminal receives DCI for PUSCH scheduling through/using TRP 1 (and/or TRP 2) from a network (S803).

Here, DCI for PUSCH scheduling may include one or more SRI fields. That is, DCI for PUSCH scheduling may include a single SRI field or a plurality of SRI fields (e.g., the first SRI field and the second SRI field).

For example, SRS resource indications by the one or more SRI fields (e.g., single SRI field / first SRI field and second SRI field) may be associated with a single SRS resource set. Alternatively, SRS resource indications by the one or more SRI fields (e.g., single SRI field / first SRI field and second SRI field) may be associated with a plurality (two) SRS resource sets, but in this case, multiple (two) SRS resource sets may be associated with one power control parameter set.

In addition, in order to indicate PUSCH transmission of 5 layers (ranks/antenna ports) or more, for example, if DCI includes a plurality of SRI fields, only when the first SRI field indicates 4 SRS resources, an SRS resource indication by the second SRI field may be applied. On the other hand, if the first SRI field indicates less than 4 SRS resources, the second SRI field may be ignored. In this case, a size of the first SRI field is 4 bits, and a size of the second SRI field may be determined according to the number of layers for the PUSCH transmission.

A terminal transmits the PUSCH based on DCI (S804).

A precoder and transmission rank of the PUSCH may be determined based on SRS resource indications by the one or more SRI fields (e.g., single SRI field / first SRI field and second SRI field) for the one or more SRS resource sets. For example, when DCI includes a single SRI field, the SRI field may be configured as a bitmap in which one bit corresponds to one SRS resource. As another example, a PUSCH transmission rank may be determined according to the number of SRS resources indicated according to SRS resource indications by the one or more SRI fields (e.g., single SRI field / first SRI field and second SRI field) or the number of SRS resources (in case of 1 port for each SRS resource) and the number of antenna ports of indicated SRS resources (in case of 1 or more ports for each SRS resource). In addition, a PUSCH transmission precoder may be determined based on precoders applied to the indicated SRS resources.

As described above, SRS resource indications by the one or more SRI fields (e.g., single SRI field / first SRI field and second SRI field) may be associated with a single SRS resource set. Alternatively, SRS resource indications by the one or more SRI fields (e.g., single SRI field / first SRI field and second SRI field) may be associated with a plurality (two) SRS resource sets, however in this case, a plurality of (two) SRS resource sets may be associated with one power control parameter set.

For example, SRS resource indications by the one or more SRI fields (e.g., single SRI field / first SRI field and second SRI field) may be associated with a single SRS resource set. For example, when DCI includes a plurality of SRI fields, N (N is a natural number) SRS resources with lower indexes are mapped to a first SRI field among a plurality of SRS resources in the single SRS resource set, and the remaining SRS resources may be mapped to the second SRI field. In addition, even if two SRS resource sets are configured by the configuration information, based on a value indicated by an SRS resource set indication field in the DCI, SRS resource indications by the one or more SRI fields (e.g., single SRI field / first SRI field and second SRI field) may be associated with the single SRS resource set.

As another example, SRS resource indications by the one or more SRI fields (e.g., single SRI field / first SRI field and second SRI field) may be associated with two SRS resource sets. In this case, the single power control parameter set may be configured only in one of the two SRS resource sets. Alternatively, even if power control parameter sets are configured for each of the two SRS resource sets, only the single power control parameter set for any one SRS resource set among the two SRS resource sets may be applied for the PUSCH transmission.

Open loop power control parameter(s) and/or closed loop power control parameter(s) for PUSCH transmission may be determined by SRS resource indications by the one or more SRI fields (e.g., single SRI field / first SRI field and second SRI field). Here, open-loop power control parameters may include at least one of a target received power value ($P_0$), a value for compensation for path loss ($\alpha$), and an index of a reference signal for measuring path loss of the PUSCH. Also, closed-loop power control parameters may include a PUSCH power control adjustment state value.

For example, when there are the first SRI field and the second SRI field in DCI, a PUSCH power control parameter set for the PUSCH transmission may be mapped to only one of the first SRI field and the second SRI field (a terminal can expect it in this way). In this case, a PUSCH power control parameter set determined by a specific SRI field to which a PUSCH power control parameter set is mapped may be applied for PUSCH transmission.

As another example, when there are the first SRI field and the second SRI field in DCI, even if two PUSCH power control parameter sets are mapped to the first SRI field and the second SRI field, respectively, only one of the two PUSCH power control parameter sets may be applied for the PUSCH transmission. That is, a PUSCH power control parameter set determined by a specific SRI field (e.g., the first/lowest SRI field) among the first SRI field and the second SRI field may be applied for PUSCH transmission.

Even if not specifically described in the description of FIG. 8, the descriptions of Embodiment 1, Embodiment 2, and Embodiment 3 may be applied to the operation of FIG. 8.

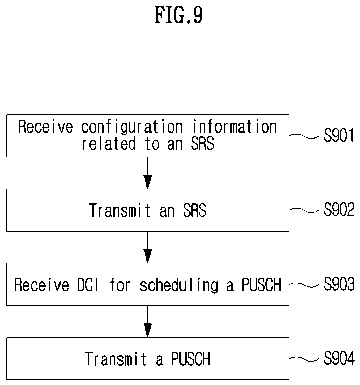

FIG. 9 is a diagram illustrating an operation of a terminal for transmitting and receiving a PUSCH according to an embodiment of the present disclosure.

FIG. 9 illustrates an operation of a terminal based on the methods proposed in the present disclosure (e.g., any one or a combination of one or more of Embodiment 1, Embodiment 2, Embodiment 3 and the detailed embodiments for Embodiments 1 to 3). The example of FIG. 9 is for convenience of description and does not limit the scope of the present disclosure. Some step(s) illustrated in FIG. 9 may be omitted depending on circumstances and/or settings. In addition, the terminal in FIG. 9 is only one example, and may be implemented as a device illustrated in FIG. 11 below. For example, the processor (102, 202) of FIG. 11 may control to transmit and receive channels/signals/data/information, etc. using the transceiver (106, 206), and may control to store transmitted or received channels/signals/data/information in the memory (104/204).

Additionally, the operation of FIG. 9 may be processed by one or more processors (102, 202) of FIG. 11. In addition, the operation of FIG. 9 may be stored in a memory (e.g., one or more memories (104, 204) of FIG. 11) in the form of instructions/programs (e.g., instruction, executable code) for driving at least one processor (e.g., 102 and 202) of FIG. 11.

A terminal receives configuration information related to an SRS from a base station (S901).

Here, configuration information may include individual information about one or more SRS resource sets. The one or more SRS resource sets may i) include only SRS resource sets for codebook usage, or ii) include only SRS resource sets for non-codebook usage, or iii) include one or more SRS resources sets for codebook usage and one or more SRS resource sets for non-codebook usage.

Information on each SRS resource set may include information (e.g., ID, index) on one or more SRS resources included in a corresponding SRS resource set, a power control parameter set for determining SRS transmission power for a corresponding SRS resource set, and a usage of an SRS resource set (e.g., any one of beam management, codebook based transmission, non-codebook based transmission, and antenna switching), etc. Here, a power control parameter set may include at least one of for example, a PO value for SRS power control, a reference signal (e.g., SS block, CSI-RS) used for estimating SRS path loss, and an alpha value for SRS power control. For example, the configuration information may correspond to SRS-Config in Table 8.

In addition, although not shown in FIG. 9, a terminal may receive configuration information related to PUSCH transmission from a base station. Here, configuration information related to PUSCH transmission may include information indicating whether the PUSCH transmission is codebook-based transmission or non-codebook-based transmission. For example, if txConfig has a codebook value, codebook-based PUSCH transmission may be indicated, and if txConfig has a non-codebook value, non-codebook-based PUSCH transmission may be indicated. In addition, the configuration information related to PUSCH transmission may include a power control parameter set for determining transmission power of the PUSCH. Here, a power control parameter set may include at least one of an identifier (ID) of power p0 configured by the base station for the PUSCH, a pathloss reference signal (RS) identifier (ID), and/or a closed-loop index. In addition, the configuration information related to PUSCH transmission may include a power control parameter set for an SRS resource set indicated by an SRI field in order to determine transmission power of the PUSCH. For example, the configuration information may correspond to PUSCH-ConfigCommon and/or PUSCH-PowerControl of Table 7.

Based on the configuration information, a terminal transmits an SRS to a base station on a plurality of SRS resources in each of the one or more SRS resource sets (S902).

A terminal receives DCI for PUSCH scheduling from a base station (S903).

Here, DCI for PUSCH scheduling may include one or more SRI fields. That is, DCI for PUSCH scheduling may include a single SRI field or a plurality of SRI fields (e.g., the first SRI field and the second SRI field).

For example, SRS resource indications by the one or more SRI fields (e.g., single SRI field / first SRI field and second SRI field) may be associated with a single SRS resource set. Alternatively, SRS resource indications by the one or more SRI fields (e.g., single SRI field / first SRI field and second SRI field) may be associated with a plurality (two) SRS resource sets, but in this case, multiple (two) SRS resource sets may be associated with one power control parameter set.

In addition, in order to indicate PUSCH transmission of 5 layers (ranks/antenna ports) or more, for example, if DCI includes a plurality of SRI fields, only when the first SRI field indicates 4 SRS resources, an SRS resource indication by the second SRI field may be applied. On the other hand, if the first SRI field indicates less than 4 SRS resources, the second SRI field may be ignored. In this case, a size of the first SRI field is 4 bits, and a size of the second SRI field may be determined according to the number of layers for the PUSCH transmission.

A terminal transmits the PUSCH based on DCI (S904).

A precoder and transmission rank of the PUSCH may be determined based on SRS resource indications by the one or more SRI fields (e.g., single SRI field / first SRI field and second SRI field) for the one or more SRS resource sets. For example, when DCI includes a single SRI field, the SRI field may be configured as a bitmap in which one bit corresponds to one SRS resource. As another example, a PUSCH transmission rank may be determined according to the number of SRS resources indicated according to SRS resource indications by the one or more SRI fields (e.g., single SRI field / first SRI field and second SRI field) or the number of SRS resources (in case of 1 port for each SRS resource) and the number of antenna ports of indicated SRS resources (in case of 1 or more ports for each SRS resource). In addition, a PUSCH transmission precoder may be determined based on precoders applied to the indicated SRS resources.

As described above, SRS resource indications by the one or more SRI fields (e.g., single SRI field / first SRI field and second SRI field) may be associated with a single SRS resource set. Alternatively, SRS resource indications by the one or more SRI fields (e.g., single SRI field / first SRI field and second SRI field) may be associated with a plurality (two) SRS resource sets, however in this case, a plurality of (two) SRS resource sets may be associated with one power control parameter set.

For example, SRS resource indications by the one or more SRI fields (e.g., single SRI field / first SRI field and second SRI field) may be associated with a single SRS resource set. For example, when DCI includes a plurality of SRI fields, N (N is a natural number) SRS resources with lower indexes are mapped to a first SRI field among a plurality of SRS resources in the single SRS resource set, and the remaining SRS resources may be mapped to the second SRI field. In addition, even if two SRS resource sets are configured by the configuration information, based on a value indicated by an SRS resource set indication field in the DCI, SRS resource indications by the one or more SRI fields (e.g., single SRI field / first SRI field and second SRI field) may be associated with the single SRS resource set.

As another example, SRS resource indications by the one or more SRI fields (e.g., single SRI field / first SRI field and second SRI field) may be associated with two SRS resource sets. In this case, the single power control parameter set may be configured only in one of the two SRS resource sets. Alternatively, even if power control parameter sets are configured for each of the two SRS resource sets, only the single power control parameter set for any one SRS resource set among the two SRS resource sets may be applied for the PUSCH transmission.

Open loop power control parameter(s) and/or closed loop power control parameter(s) for PUSCH transmission may be determined by SRS resource indications by the one or more SRI fields (e.g., single SRI field / first SRI field and second SRI field). Here, open-loop power control parameters may include at least one of a target received power value ($P_0$), a value for compensation for path loss ($\alpha$), and an index of a reference signal for measuring path loss of the PUSCH. Also, closed-loop power control parameters may include a PUSCH power control adjustment state value.

For example, when there are the first SRI field and the second SRI field in DCI, a PUSCH power control parameter set for the PUSCH transmission may be mapped to only one of the first SRI field and the second SRI field (a terminal can expect it in this way). In this case, a PUSCH power control parameter set determined by a specific SRI field to which a PUSCH power control parameter set is mapped may be applied for PUSCH transmission.

As another example, when there are the first SRI field and the second SRI field in DCI, even if two PUSCH power control parameter sets are mapped to the first SRI field and the second SRI field, respectively, only one of the two PUSCH power control parameter sets may be applied for the PUSCH transmission. That is, a PUSCH power control parameter set determined by a specific SRI field (e.g., the first/lowest SRI field) among the first SRI field and the second SRI field may be applied for PUSCH transmission.

Even if not specifically described in the description of FIG. 9, the descriptions of Embodiment 1, Embodiment 2, and Embodiment 3 may be applied to the operation of FIG. 9.

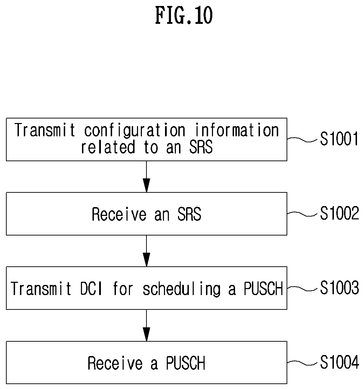

FIG. 10 is a diagram illustrating an operation of a base station for transmitting and receiving a PUSCH according to an embodiment of the present disclosure.

FIG. 10 illustrates an operation of a base station based on the methods proposed in the present disclosure (e.g., any one or a combination of one or more of Embodiment 1, Embodiment 2, Embodiment 3 and the detailed embodiments for Embodiments 1 to 3). The example of FIG. 10 is for convenience of description and does not limit the scope of the present disclosure. Some step(s) illustrated in FIG. 10 may be omitted depending on circumstances and/or settings. In addition, the base station in FIG. 10 is only one example, and may be implemented as a device illustrated in FIG. 11 below. For example, the processor (102, 202) of FIG. 11 may control to transmit and receive channels/signals/data/information, etc. using the transceiver (106, 206), and may control to store transmitted or received channels/signals/data/information in the memory (104/204).

Additionally, the operation of FIG. 10 may be processed by one or more processors (102, 202) of FIG. 11. In addition, the operation of FIG. 10 may be stored in a memory (e.g., one or more memories (104, 204) of FIG. 11) in the form of instructions/programs (e.g., instruction, executable code) for driving at least one processor (e.g., 102 and 202) of FIG. 11.

A base station transmits configuration information related to an SRS to a terminal (S1001).

Here, configuration information may include individual information about one or more SRS resource sets. The one or more SRS resource sets may i) include only SRS resource sets for codebook usage, or ii) include only SRS resource sets for non-codebook usage, or iii) include one or more SRS resources sets for codebook usage and one or more SRS resource sets for non-codebook usage.

Information on each SRS resource set may include information (e.g., ID, index) on one or more SRS resources included in a corresponding SRS resource set, a power control parameter set for determining SRS transmission power for a corresponding SRS resource set, and a usage of an SRS resource set (e.g., any one of beam management, codebook based transmission, non-codebook based transmission, and antenna switching), etc. Here, a power control parameter set may include at least one of for example, a P0 value for SRS power control, a reference signal (e.g., SS block, CSI-RS) used for estimating SRS path loss, and an alpha value for SRS power control. For example, the configuration information may correspond to SRS-Config in Table 8.

In addition, although not shown in FIG. 10, a base station may transmit configuration information related to PUSCH transmission to a terminal. Here, configuration information related to PUSCH transmission may include information indicating whether the PUSCH transmission is codebook-based transmission or non-codebook-based transmission. For example, if txConfig has a codebook value, codebook-based PUSCH transmission may be indicated, and if txConfig has a non-codebook value, non-codebook-based PUSCH transmission may be indicated. In addition, the configuration information related to PUSCH transmission may include a power control parameter set for determining transmission power of the PUSCH. Here, a power control parameter set may include at least one of an identifier (ID) of power p0 configured by the base station for the PUSCH, a pathloss reference signal (RS) identifier (ID), and/or a closed-loop index. In addition, the configuration information related to PUSCH transmission may include a power control parameter set for an SRS resource set indicated by an SRI field in order to determine transmission power of the PUSCH. For example, the configuration information may correspond to PUSCH-ConfigCommon and/or PUSCH-PowerControl of Table 7.

Based on the configuration information, a base station receives an SRS from a terminal on a plurality of SRS resources in each of the one or more SRS resource sets (S1002).

A base station transmits DCI for PUSCH scheduling to a terminal (S1003).

Here, DCI for PUSCH scheduling may include one or more SRI fields. That is, DCI for PUSCH scheduling may include a single SRI field or a plurality of SRI fields (e.g., the first SRI field and the second SRI field).

For example, SRS resource indications by the one or more SRI fields (e.g., single SRI field / first SRI field and second SRI field) may be associated with a single SRS resource set. Alternatively, SRS resource indications by the one or more SRI fields (e.g., single SRI field / first SRI field and second SRI field) may be associated with a plurality (two) SRS resource sets, but in this case, multiple (two) SRS resource sets may be associated with one power control parameter set.

In addition, in order to indicate PUSCH transmission of 5 layers (ranks/antenna ports) or more, for example, if DCI includes a plurality of SRI fields, only when the first SRI field indicates 4 SRS resources, an SRS resource indication by the second SRI field may be applied. On the other hand, if the first SRI field indicates less than 4 SRS resources, the second SRI field may be ignored. In this case, a size of the first SRI field is 4 bits, and a size of the second SRI field may be determined according to the number of layers for the PUSCH transmission.

A base station receives the PUSCH based on DCI (S1004).

A precoder and transmission rank of the PUSCH may be determined based on SRS resource indications by the one or more SRI fields (e.g., single SRI field / first SRI field and second SRI field) for the one or more SRS resource sets. For example, when DCI includes a single SRI field, the SRI field may be configured as a bitmap in which one bit corresponds to one SRS resource. As another example, a PUSCH transmission rank may be determined according to the number of SRS resources indicated according to SRS resource indications by the one or more SRI fields (e.g., single SRI field / first SRI field and second SRI field) or the number of SRS resources (in case of 1 port for each SRS resource) and the number of antenna ports of indicated SRS resources (in case of 1 or more ports for each SRS resource). In addition, a PUSCH transmission precoder may be determined based on precoders applied to the indicated SRS resources.

As described above, SRS resource indications by the one or more SRI fields (e.g., single SRI field / first SRI field and second SRI field) may be associated with a single SRS resource set. Alternatively, SRS resource indications by the one or more SRI fields (e.g., single SRI field / first SRI field and second SRI field) may be associated with a plurality (two) SRS resource sets, however in this case, a plurality of (two) SRS resource sets may be associated with one power control parameter set.

For example, SRS resource indications by the one or more SRI fields (e.g., single SRI field / first SRI field and second SRI field) may be associated with a single SRS resource set. For example, when DCI includes a plurality of SRI fields, N (N is a natural number) SRS resources with lower indexes are mapped to a first SRI field among a plurality of SRS resources in the single SRS resource set, and the remaining SRS resources may be mapped to the second SRI field. In addition, even if two SRS resource sets are configured by the configuration information, based on a value indicated by an SRS resource set indication field in the DCI, SRS resource indications by the one or more SRI fields (e.g., single SRI field / first SRI field and second SRI field) may be associated with the single SRS resource set.

As another example, SRS resource indications by the one or more SRI fields (e.g., single SRI field / first SRI field and second SRI field) may be associated with two SRS resource sets. In this case, the single power control parameter set may be configured only in one of the two SRS resource sets. Alternatively, even if power control parameter sets are configured for each of the two SRS resource sets, only the single power control parameter set for any one SRS resource set among the two SRS resource sets may be applied for the PUSCH transmission.

Open loop power control parameter(s) and/or closed loop power control parameter(s) for PUSCH transmission may be determined by SRS resource indications by the one or more SRI fields (e.g., single SRI field / first SRI field and second SRI field). Here, open-loop power control parameters may include at least one of a target received power value

($P_0$), a value for compensation for path loss ($\alpha$), and an index of a reference signal for measuring path loss of the PUSCH. Also, closed-loop power control parameters may include a PUSCH power control adjustment state value.

For example, when there are the first SRI field and the second SRI field in DCI, a PUSCH power control parameter set for the PUSCH transmission may be mapped to only one of the first SRI field and the second SRI field (a terminal can expect it in this way). In this case, a PUSCH power control parameter set determined by a specific SRI field to which a PUSCH power control parameter set is mapped may be applied for PUSCH transmission.

As another example, when there are the first SRI field and the second SRI field in DCI, even if two PUSCH power control parameter sets are mapped to the first SRI field and the second SRI field, respectively, only one of the two PUSCH power control parameter sets may be applied for the PUSCH transmission. That is, a PUSCH power control parameter set determined by a specific SRI field (e.g., the first/lowest SRI field) among the first SRI field and the second SRI field may be applied for PUSCH transmission.

Even if not specifically described in the description of FIG. 10, the descriptions of Embodiment 1, Embodiment 2, and Embodiment 3 may be applied to the operation of FIG. 10.

General Device to which the Present Disclosure may be applied

FIG. 11 is a diagram which illustrates a block diagram of a wireless communication device according to an embodiment of the present disclosure.

In reference to FIG. 11, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Availability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method of transmitting a physical uplink shared channel (PUSCH) in a wireless communication system, the method performed by a terminal comprising:

    receiving, from a base station, configuration information related to a sounding reference signal (SRS), wherein the configuration information includes information on one or more SRS resource sets, and each of the one or more SRS resource sets includes a plurality of SRS resources;
    transmitting, to the base station, the SRS on a plurality of SRS resources in each of the one or more SRS resource sets;
    receiving, from the base station, downlink control information (DCI) for scheduling the PUSCH for non-codebook based transmission, wherein the DCI includes one or more SRS resource indicator (SRI) fields; and
    transmitting, to the base station, the PUSCH based on the DCI,
    wherein a precoder and transmission rank of the PUSCH are determined based on the one or more SRI fields for the one or more SRS resource sets, and
    wherein the one or more of SRS resource sets are associated with a single power control parameter set.

2. The method of claim 1, wherein SRS resource indications by the one or more SRI fields are associated with a single SRS resource set.

3. The method of claim 2, wherein the one or more SRI fields are a first SRI field and a second SRI field, and wherein among a plurality of SRS resources in the single SRS resource set, N (N is a natural number) SRS resources with lower indexes are mapped to the first SRI field and the remaining SRS resources are mapped to the second SRI field.

4. The method of claim 2, wherein even though two SRS resource sets are configured by the configuration information, based on a value indicated by an SRS resource set indication field in the DCI, SRS resource indications by the one or more SRI fields are associated with the single SRS resource set.

5. The method of claim 1, wherein SRS resource indications by the one or more SRI fields are associated with two SRS resource sets, and
wherein the single power control parameter set is configured only for one of the two SRS resource sets.

6. The method of claim 1, wherein SRS resource indications by the one or more SRI fields are associated with two SRS resource sets, and
wherein even though power control parameter sets are configured for each of the two SRS resource sets, only the single power control parameter set for any one of the two SRS resource sets is applied for the PUSCH transmission.

7. The method of claim 1, wherein the one or more SRI fields are a first SRI field and a second SRI field, and wherein a PUSCH power control parameter set for the PUSCH transmission is mapped to only one of the first SRI field and the second SRI field.

8. The method of claim 1, wherein the one or more SRI fields are a first SRI field and a second SRI field, and wherein even though two PUSCH power control parameter sets are respectively mapped to the first SRI field and the second SRI field, only one of the two PUSCH power control parameter sets is applied for the PUSCH transmission.

9. The method of claim 1, wherein the one or more SRI fields are a first SRI field and a second SRI field,

   wherein SRS resource indication by the second SRI field is applied only when the first SRI field indicates four SRS resources, and
   wherein the second SRI field is ignored when the first SRI field indicates less than 4 SRS resources.

10. The method of claim 9, wherein a size of the first SRI field is 4 bits, and a size of the second SRI field is determined according to a number of layers for transmission of the PUSCH.

11. The method of claim 1, wherein the one or more SRI fields are a single SRI field, and
wherein the single SRI field is composed of a bitmap in which one bit corresponds to one SRS resource.

12. A terminal of transmitting a physical uplink shared channel (PUSCH) in a wireless communication system, the terminal comprising:

   at least one transceiver for transmitting and receiving a wireless signal; and
   at least one processor for controlling the at least one transceiver,
   wherein the at least one processor configured to:

      receive, from a base station, configuration information related to a sounding reference signal (SRS), wherein the configuration information includes information on one or more SRS resource sets, and each of the one or more SRS resource sets includes a plurality of SRS resources;
      transmit, to the base station, the SRS on a plurality of SRS resources in each of the one or more SRS resource sets;
      receive, from the base station, downlink control information (DCI) for scheduling the PUSCH for non-codebook based transmission, wherein the DCI includes one or more SRS resource indicator (SRI) fields; and
      transmit, to the base station, the PUSCH based on the DCI,
      wherein a precoder and transmission rank of the PUSCH are determined based on the one or more SRI fields for the one or more SRS resource sets, and
      wherein the one or more of SRS resource sets are associated with a single power control parameter set.

13. A base station of receiving a physical uplink shared channel (PUSCH) in a wireless communication system, the base station comprising:

at least one transceiver for transmitting and receiving a wireless signal; and
at least one processor for controlling the at least one transceiver,
wherein the at least one processor configured to:

transmit, to a terminal, configuration information related to a sounding reference signal (SRS), wherein the configuration information includes information on one or more SRS resource sets, and each of the one or more SRS resource sets includes a plurality of SRS resources;
receive, from the terminal, the SRS on a plurality of SRS resources in each of the one or more SRS resource sets;
transmit, to the terminal, downlink control information (DCI) for scheduling the PUSCH for non-codebook based transmission, wherein the DCI includes one or more SRS resource indicator (SRI) fields; and
receive, from the terminal, the PUSCH based on the DCI,
wherein a precoder and transmission rank of the PUSCH are determined based on the one or more SRI fields for the one or more SRS resource sets, and
wherein the one or more of SRS resource sets are associated with a single power control parameter set.

# FIG.1

# FIG.2

Radio Frame 10ms

Fixed Size

Subframe 1ms

| 0 | 1 | 2 | 3 | 4 | 5 | 6 | 7 | 8 | 9 |
|---|---|---|---|---|---|---|---|---|---|

Subframe ={1,2,4} Slots

Slot

| 0 | 1 | 2 | 3 |
|---|---|---|---|

Slot={7,14} Symbols

Symbol

| 0 | 1 | 2 | 3 | 4 | 5 | 6 | 7 | 8 | 9 | 10 | 11 | 12 | 13 |
|---|---|---|---|---|---|---|---|---|---|----|----|----|----|

Size depends on subcarrier spacing

Mini-Slot
(URLLC)

Mini-Slot={2,4,7} Symbols

# FIG.3

One Subframe

$14 \cdot 2^{\mu}$ OFDM Symbol

$k = N_{RB}^{\mu} N_{SC}^{RB} - 1$

Resource Block

Resource Element
- In a resource grid, $(k,\bar{l})$
- In a resource block, $(k,l)$

$N_{RB}^{\mu} N_{SC}^{RB} - 1$ Subcarrier

$N_{SC}^{RB}$ Subcarrier

$k = 0$

$l = 0$

$l = 14 \cdot 2^{\mu} - 1$

EP 4 254 846 A1

# FIG.4

38

# FIG.5

Resource grid

A carrier
(up to 3300 subcarriers,i,e.,275 RBs)

A BWP

1 RB=12 subcarrier

1 RE

1 subcarrier

1 Symbol

l=0 ·····

k=0

FIG.6

# FIG.7

TRP 1

TRP 2

Layer group #1
for CW #1

Layer group #2
for CW #1

UE1

(a)

TRP 1

TRP 2

Layer group #1
for CW #1

Layer group #2
for CW #2

UE1

(b)

# FIG.8

Network                                          Terminal

Configuration information ⌒ S801

SRS ⌒ S802

DCI for scheduling a PUSCH ⌒ S803

PUSCH ⌒ S804

# FIG.9

```
┌─────────────────────────────────────┐
│  Receive configuration information   │ ～ S901
│         related to an SRS            │
└─────────────────────────────────────┘
                  │
                  ▼
┌─────────────────────────────────────┐
│          Transmit an SRS             │ ～ S902
└─────────────────────────────────────┘
                  │
                  ▼
┌─────────────────────────────────────┐
│   Receive DCI for scheduling a PUSCH │ ～ S903
└─────────────────────────────────────┘
                  │
                  ▼
┌─────────────────────────────────────┐
│          Transmit a PUSCH            │ ～ S904
└─────────────────────────────────────┘
```

FIG.10

Transmit configuration information related to an SRS — S1001

Receive an SRS — S1002

Transmit DCI for scheduling a PUSCH — S1003

Receive a PUSCH — S1004

# FIG.11

Europäisches
Patentamt

European
Patent Office

Office européen
des brevets

# EUROPEAN SEARCH REPORT

Application Number

EP 23 15 5657

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/162718 A1 (LG ELECTRONICS INC [KR]) 13 August 2020 (2020-08-13) * paragraph [0226] - paragraph [0286] * ----- | 1-13 | INV. H04L5/00 H04B7/0413 H04B7/06 H04W72/20 |
| X | WO 2021/194218 A1 (LG ELECTRONICS INC) 30 September 2021 (2021-09-30) * the whole document * | 1-13 | |
| E | & US 2023/189254 A1 (GO SEONGWON [KR] ET AL) 15 June 2023 (2023-06-15) * paragraph [0114] - paragraph [0367] * ----- | 1-13 | |
| X | WO 2020/150943 A1 (GUANGDONG OPPO MOBILE TELECOMMUNICATIONS CORP LTD [CN]) 30 July 2020 (2020-07-30) * paragraph [0092] - paragraph [0172] * ----- | 1-13 | |
| X | US 2021/377870 A1 (YANG WEI [US] ET AL) 2 December 2021 (2021-12-02) * paragraph [0055] - paragraph [0057] * ----- | 1-13 | |

TECHNICAL FIELDS
SEARCHED (IPC)

H04L
H04W
H04B

The present search report has been drawn up for all claims

| Place of search | Date of completion of the search | Examiner |
|---|---|---|
| The Hague | 16 August 2023 | Dupuis, Hervé |

EPO FORM 1503 03.82 (P04C01)

## ANNEX TO THE EUROPEAN SEARCH REPORT
## ON EUROPEAN PATENT APPLICATION NO.

EP 23 15 5657

This annex lists the patent family members relating to the patent documents cited in the above-mentioned European search report.
The members are as contained in the European Patent Office EDP file on
The European Patent Office is in no way liable for these particulars which are merely given for the purpose of information.

16-08-2023

| Patent document cited in search report | | Publication date | Patent family member(s) | | Publication date |
|---|---|---|---|---|---|
| WO 2020162718 | A1 | 13-08-2020 | NONE | | |
| WO 2021194218 | A1 | 30-09-2021 | KR | 20220157964 A | 29-11-2022 |
| | | | US | 2023189254 A1 | 15-06-2023 |
| | | | WO | 2021194218 A1 | 30-09-2021 |
| WO 2020150943 | A1 | 30-07-2020 | CN | 112703753 A | 23-04-2021 |
| | | | WO | 2020150943 A1 | 30-07-2020 |
| US 2021377870 | A1 | 02-12-2021 | CN | 115669094 A | 31-01-2023 |
| | | | EP | 4158956 A1 | 05-04-2023 |
| | | | US | 2021377870 A1 | 02-12-2021 |
| | | | WO | 2021243365 A1 | 02-12-2021 |

EPO FORM P0459

For more details about this annex : see Official Journal of the European Patent Office, No. 12/82